(19) Europäisches Patentamt
European Patent Office
Office européen des brevets

(11) EP 1 035 471 A1

(12) **EUROPEAN PATENT APPLICATION**
published in accordance with Art. 158(3) EPC

(43) Date of publication:
**13.09.2000 Bulletin 2000/37**

(21) Application number: **98954765.8**

(22) Date of filing: **19.11.1998**

(51) Int. Cl.7: **G06F 9/38**, G06F 15/82

(86) International application number:
**PCT/JP98/05230**

(87) International publication number:
**WO 99/27439 (03.06.1999 Gazette 1999/22)**

(84) Designated Contracting States:
**AT BE CH CY DE DK ES FI FR GB GR IE IT LI LU MC NL PT SE**

(30) Priority: **20.11.1997 JP 36247397**
**05.10.1998 JP 28211898**

(71) Applicant: **Seki, Hajime**
**Matsuyama-shi, Ehime 790-0848 (JP)**

(72) Inventor: **Seki, Hajime**
**Matsuyama-shi, Ehime 790-0848 (JP)**

(74) Representative:
**Sajda, Wolf E., Dipl.-Phys. et al**
**MEISSNER, BOLTE & PARTNER**
**Postfach 86 06 24**
**81633 München (DE)**

(54) **COMPUTER SYSTEM**

(57) A computer system for processing a program described in the machine language of a stack machine, comprising a data cache (11), an integrated register file (6) in which data is written in each of entries, an advanced pointer stack (3) and a completion pointer stack (4) in which the addresses of the entries of the integrated register file are written into entries, an instruction queue (5) having the construction of an FIFO in which the contents of each of instructions are written into each entry, arithmetic units (80 and 81), and a loading/storing unit (83). When the instruction held in the first entry of the instruction queue can be completed or has been completed, the completion pointer stack is operated so as to execute the same operation of the advanced pointer stack when the held instruction is decoded on the basis of the contents of the first entry of the instruction queue, and the first entry is eliminated from the instruction queue.

FIG.1

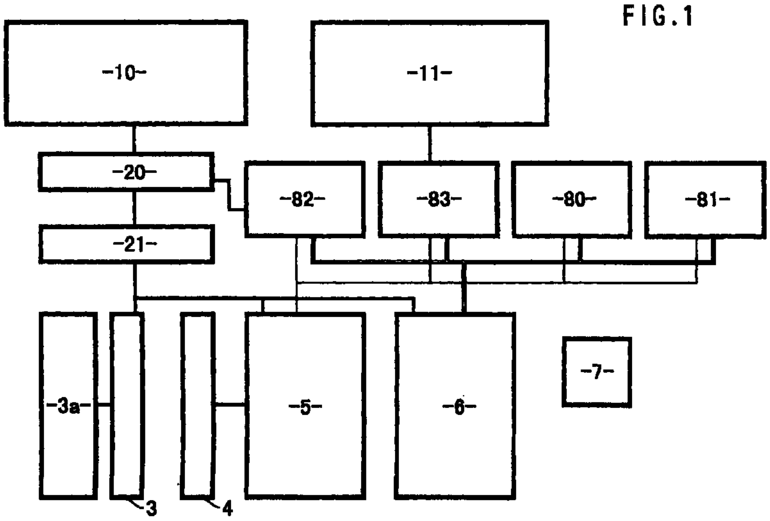


EP 1 035 471 A1

## Description

### FIELD OF THE INVENTION

The present invention relates to a computer system of a novel construction that efficiently executes programs described in a machine language based on the stack architecture.

### DESCRIPTION OF THE PRIOR ART

So far, stack machines basically execute instructions in order. Namely, in the context of stack machines, as each of arithmetic/logic instructions means popping source data from the operand stack, operating on them and pushing the result data onto the operand stack, instructions of which a program is composed are executed one after another.

These traditional stack machines have the advantage of simple control structure, as instructions are executed in order. These machines, however, have suffered from a problem that their performance is restricted.

Then, computer systems that execute programs described in a machine language based on the stack architecture in an out-of-order manner were devised. E.g. JP 2-260082, US 5522051 and processor elements described in US 5333320 / US 5765014. Processors shown in these specifications have suffered from a problem that improvement in performance is insufficient, and that in securing precise handling of exceptions.

The present invention has been proposed with a view to solving the foregoing problems. Its essential object is to provide a computer system that secures precise handling of exceptions, and that executes programs described in a machine language based on the stack architecture more efficiently by adopting an out-of-order mechanism.

### SUMMARY OF THE INVENTION

The computer system according to the present invention comprises a data cache, a consolidated register file each entry of which is designed to hold data, an advanced pointer stack and a completed pointer stack each having the construction of a stack each entry of which is designed to hold an entry address in the consolidated register file, an instruction queue having the construction of a FIFO queue each entry of which is designed to hold substance of an instruction, an arithmetic/logic unit that is designed to execute arithmetic/logic operations, and a load/store unit that can access the data cache and the consolidated register file.

Stack state such as { ....., word1, word2, word3, word4 } (the right end is the top of the stack) in a traditional stack machine corresponds to state in which state of pointer stack is such as { ....., 〈a〉, 〈b〉, 〈c〉, 〈d〉 } (the right end is the top of the stack), and in which word1, word2, word3 and word4 are held in entries of the consolidated register file whose addresses are 〈a〉, 〈b〉, 〈c〉 and 〈d〉 respectively, in the computer system according to the present invention.

In the computer system according to the present invention, each time an instruction is decoded, the advanced pointer stack and the consolidated register file are manipulated in accordance with the instruction, and substance of the instruction is written into the instruction queue. At this juncture, the same kind of stack operation as that to be applied originally on the operand stack prescribed by the instruction is applied on the advanced pointer stack. Here, to emulate a push operation of a word of data onto the operand stack, the computer system of the present invention allocates an entry of the consolidated register file that has not been allocated to hold the data, and pushes the address of the entry onto the advanced pointer stack.

Namely, in the case that an instruction including a pop operation from the operand stack is decoded, entry addresses in the consolidated register file, to the number of words to be popped, are popped from the advanced pointer stack. In the case that an instruction including a push operation onto the operand stack is decoded, entries of the consolidated register file that have not been allocated are allocated, to the number of words to be pushed, and the addresses of the newly allocated entries of the consolidated register file are pushed onto the advanced pointer stack. And moreover, substance of the decoded instruction, together with the popped / pushed entry addresses in the consolidated register file in the case that the instruction includes a pop / push operation, is written into the instruction queue.

Unexecuted instructions held in the instruction queue are to be executed out of order on the principle of data drive (each operation is performed after become executable with required source data fully prepared).

For example, if an arithmetic/logic instruction is held in an entry of the instruction queue and its required source data have fully been written in the consolidated register file, and if an arithmetic logic unit is available, the arithmetic/logic operation gets to be performed. After the operation is finished normally, the result is written into the destination entry of the consolidated register file.

When the instruction held in the head entry of the instruction queue is/becomes ready to be completed, in accordance with the substance in the head entry of the instruction queue, the completed pointer stack is manipulated to reproduce the operation that was applied on the advanced pointer stack in the course of decoding of the instruction, the head entry is dequeued, and allocation of each entry of the consolidated register file whose address the completed pointer stack loses hold of on account of a pop operation is removed.

## BRIEF DESCRIPTION OF THE DRAWINGS

Fig. 1 is a block diagram showing the basic structure of a preferred computer system according to the present invention;
Fig. 2 illustrates the structure of the advanced pointer stack and the completed pointer stack;
Fig. 3 illustrates the detailed structure of each entry of the consolidated register file in the first embodiment of the present invention described later;
Fig. 4 illustrates the structure of the instruction queue;
Fig. 5 illustrates the detailed structure of each entry of the instruction queue;
Fig. 6 - 12 show contents of the advanced pointer stack, the completed pointer stack, the instruction queue, and the consolidated register file, at each cycle in the course of an example action in the first embodiment of the present invention;
Fig. 13 is a diagram showing how an example program is converted in the case that the system of the first embodiment of the present invention is so structured as to be able to decode up to three instructions per cycle;
Fig. 14 illustrates the detailed structure of each entry of the consolidated register file in the second embodiment of the present invention described later; and
Fig. 15 - 21 show contents of the advanced pointer stack, the completed pointer stack, the instruction queue, and the consolidated register file, at each cycle in the course of an example action in the second embodiment of the present invention.

## PREFERRED EMBODIMENTS OF THE INVENTION

In the following, preferred computer systems according to the present invention will be described referring to the figures. Now, the computer systems that are embodiments of the present invention described later are so structured as to execute basic instructions of a stack machine prescribed by Java Virtual Machine (Java VM) on a hardware basis. Namely, loads, stores and operations including arithmetic/logic operations are performed by the word, which is 32 bits wide. Therefore, for example, an arithmetic operation between two-word data produces a two-word result from 4 words -2 two-word - of source data.

In the following, the stack that data are pushed onto / popped from by the word in the context of traditional stack machines will be referred to as word stack to be distinguished from pointer stacks described later.

In Java VM, complex instructions that are not, by nature, supposed to be executed on a hardware basis are prescribed. The computer systems that are embodiments of the present invention described later are, though, so structured as to, on a hardware basis, execute basic instructions listed in the following.

(a) Instructions to Push Immediate Data onto the Operand Stack bipush, sipush, aconst_null, iconst_m1, iconst_〈i〉, fconst_〈f〉, lconst_〈l〉, dconst_〈d〉
(b) Instructions to Load Variable Data onto the Operand Stack ldc1, ldc2, iload, iload_〈n〉, fload, fload_〈n〉, aload, aload_〈n〉, ldc2w, lload, lload_〈n〉, dload, dload_〈n〉, iaload, laload, faload, daload, aaload, baload, caload, saload
(c) Instructions to Store Data on the Operand Stack into Variables istore, istore_〈n〉, fstore, fstore_〈n〉, astore, astore_〈n〉, istore, lstore_〈n〉, dstore, dstore_〈n〉, iastore, lastore, fastore, dastore, aastore, bastore, castore, sastore
(d) Instructions to Generate Result Data
(d-1) Arithmetic Instructions iadd, ladd, fadd, dadd, isub, lsub, fsub, dsub, imul, lmul, fmul, dmul, idiv, ldiv, fdiv, ddiv, irem, lrem, frem, drem, ineg, lneg, fneg, dneg
(d-2) Logical Instructions ishl, ishr, iushr, lshl, lshr, lushr, iand, land, ior, lor, ixor, lxor
(d-3) Conversion Instructions i21, i2f, i2d, l2i, l2f, l2d, f2i, f2l, f2d, d2i, d2l, d2f, int2byte, int2char, int2short
(d-4) Compare Instructions lcmp, fcmpl, fcmpg, dcmpl, dcmpg
(e) Stack Instructions pop, pop2, dup, dup2, dup_x1, dup2_x1, dup_x2, dup2_x2, swap
(f) Branch Instructions ifeq, ifnull, iflt, ifle, ifne, ifnonnull, ifgt, ifge, if_icmpeq, if_icmpne, if_icmplt, if_icmpgt, if_icmple, if_icmpge, goto, goto_w

Hereafter, unless otherwise stated, "instruction" will be identified as one of the above instructions.

In the following, two embodiments - the first and the second - are described, which differ from each other in the way of dealing with stack instructions.

For a starter, the computer system of the first embodiment of the present invention is described.

Fig. 1 is a block diagram of the computer system. Shown in Fig. 1 are an instruction cache 10, a data cache 11, an instruction fetch unit 20, an instruction decode-and-set unit 21, an advanced pointer stack 3, an advanced pointer stack history file 3a, a completed pointer stack 4, an instruction queue 5, a consolidated register file 6, a free list 7, arithmetic logic unit 0/1 80,81, a branch unit 82, and a load/store unit 83.

Described below are the detailed structure of each component of the computer system of the first embodiment of the present invention.

(A) Instruction Fetch Unit

The instruction fetch unit is furnished with a program counter (pc register), which is not shown in the figures, and so structured that it fetches instructions from the instruction cache and delivers them to the instruction decode-and-set unit. It also carries out prediction and execution of branches.

(B) Instruction Decode-and-Set Unit

The instruction decode-and-set unit is so structured that it decodes instructions delivered by the instruction fetch unit, and generates various signals to set the advanced pointer stack, the instruction queue, the consolidated register file and the like, each described later, so that operations such as those to generate result data prescribed by instructions will be performed in a data-driven manner.

(C) Pointer Stacks

A pointer stack has the construction of a stack, each entry of which is designed to hold an entry address in the consolidated register file.

State of the word stack such as { ....., word1, word2, word3, word4 } (the right end is the top of the stack) in a traditional stack machine corresponds to state in which state of pointer stack is such as { ....., 〈a〉, 〈b〉, 〈c〉, 〈d〉} (the right end is the top of the stack), and in which word1, word2, word3 and word4 are held in entries of the consolidated register file whose addresses are 〈a〉, 〈b〉, 〈c〉 and 〈d〉 respectively, in the computer system according to the present invention.

The computer system of the present invention is furnished with two winter stacks: an advanced pointer stack (APS) and a completed pointer stack (CPS).

In the computer system of the present invention, each time an instruction is decoded, the advanced pointer stack (hereafter, it will be referred to as APS) and the consolidated register file are manipulated, and substance of the instruction is written into the instruction queue, so that whatever operation such as that to generate result data prescribed by the instruction is set to be performed in a data-driven manner. Namely, the advanced pointer stack reflects the stack operations prescribed by all the instructions that have already been decoded and set.

On the other hand, the completed pointer stack (hereafter, it will be referred to as CPS) reflects the stack operations prescribed by all the instructions that have already been completed in the order of the instruction sequencing. The computer system of the present invention is capable of out-of-order execution based on the principle of data drive, and the completed pointer stack enables the system to construct the virtual state on the assumption that the program was being executed in order, to secure precise handling of exceptions.

As for the pointer stacks and the consolidated register file, the number of entries is limited. So, when the word stack grows, only the vicinity of the top of the stack can be held by the pointer stacks and the consolidated register file. The computer system of this embodiment is so structured that the remaining part of the word stack is stored in the data cache. For that, each pointer stack is constructed as a circular buffer, and has two registers: a push pointer and a bottom pointer. The push pointer indicates the entry over the top one holding an entry address in the consolidated register file. The bottom pointer indicates the lowest entry holding an entry address in the consolidated register file. You can know how many entries are vacant in the pointer stack by subtracting the value of the push pointer from that of the bottom pointer. In the initialized state, the value of the push pointer and that of the bottom pointer are both set to be zero.

Fig. 2 shows the relation among the pointer stacks, the push pointers and the bottom pointer in the computer system of this embodiment. Two pointer stacks - APS 3 and CPS 4- have the same number of entries, which are likewise tagged with address 0, 1, 2, ... from bottom up. Each of the shaded entries is supposed to hold an entry address in the consolidated register file. As shown in Fig. 2, APS and CPS are each furnished with a push pointer, which is respectively named PP_OF_APS and PP_OF_CPS. On the other hand, only one bottom pointer exists, which is shared between APS and CPS. This is named BP_OF_PS.

Between APS and CPS, comparators exist to the number of the entries. Between APS entry and CPS entry of the same entry address (abreast horizontally in Fig. 2), contents are compared.

In compliance with a push operation of a word onto the operand stack prescribed by an instruction, the system is so structured that the address of an allocated entry of the consolidated register file is written into the APS entry indicated by PP_OF_APS and the value of PP_OF_APS is increased by one. Conversely, in compliance with a pop operation of a word from the operand stack prescribed by an instruction, the system is so structured that the value of PP_OF_APS is decreased by one. CPS and PP_OF_CPS behave likewise.

In the case that the content of the entry indicated by BP_OF_PS is identical between APS and CPS, a word of data held in the entry of the consolidated register file indicated by the content identical between the two pointer stacks can be spilt into the data cache. In that case, the value of BP_OF_PS is increased by one. Conversely, to fill the consolidated register file with the data that has been spilt into the data cache, the system assigns to the last-spilt word of data an entry of the consolidated register file, which has been registered on the free list, writes the data into the entry, writes the address of the entry of the consolidated register file into the entry under that indicated by BP_OF_PS both in APS and in CPS, and decrease the value of BP_OF_PS by one.

The computer system of this embodiment is furnished with an advanced pointer stack history file (hereafter, it will be referred to as APS history file) for incarnation of speculative execution based on branch prediction. Each entry of the APS history file is designed to hold contents of all the APS entries and PP_OF_APS.

(D) Consolidated Register File (CRF)

The consolidated register file (hereafter, it will be referred to as CRF) holds contents of the word stack of a traditional stack machine in random order.

Fig. 3 illustrates the detailed structure of entry 6(i) of CRF 6 in the first embodiment. Here, "i" stands for entry address. Each entry 6(i) of CRF 6 comprises data field 61(i), write completion flag (WCF) field 62(i), color (C) field 63(i) and busy bit (BB) field 64(i).

As for the hardware implementation, CRF is practically made of register files which respectively correspond to the fields listed above.

The data field of each CRF entry is designed to hold a word of data.

The WCF field of each CRF entry is designed to hold "1" in the case that data has already been written in the data field, and hold "0" otherwise.

In the C field of each CRF entry, the difference between allocated according to a push operation prescribed by an instruction and allocated when loaded from the data cache for avoiding underflow is specified. In the former case, a branch tag is also written. In this embodiment, as described later, there is a certain relationship between branch tags and entry addresses in the APS history file.

The BB field of each CRF entry is designed to hold "1" in the case that the CRF entry is allocated to hold data, and hold "0" otherwise.

(E) Free List (FL)

The free list (hereafter, it will be referred to as FL) is memory that holds addresses of free, namely, unallocated (the content of the BB field is "0") CRF entries. In this embodiment FL is constructed as a circular FIFO queue.

In the initialized state, the addresses of all CRF entries are registered on FL. In the case that a free CRF entry needs to be allocated, an address of free CRF entry is taken out of FL. Conversely, when a CRF entry is released from allocation, the address of the entry gets to be registered on FL.

(F) Instruction Queue (IQ)

The instruction queue (hereafter, it will be referred to as IQ) is memory that holds instructions that have already been decoded and set and that are waiting execution or completion, and is constructed as a circular FIFO queue.

Fig. 4 illustrates the structure of IQ. In Fig. 4, entries of IQ 5 are tagged with address 0, 1, 2, ... from bottom up, and each of the shaded entries of IQ 5 is supposed to hold an instruction waiting execution or completion. IQ is furnished with two registers: a setting pointer and a completion pointer. The setting pointer indicates the entry into which substance of the instruction to be decoded and set next is to be written. The completion pointer indicates the entry of the instruction to be completed next. You can know how many entries are vacant in IQ by subtracting the value of the setting pointer from that of the completion pointer. In the initialized state, the value of the setting pointer and that of the completion pointer are both set to be zero.

Fig. 5 illustrates the detailed structure of entry 5(i) of IQ 5. Here, "i" stands for entry address. Each entry 5(i) of IQ 5 comprises operation field 500(i), operand field 501(i), 1st source field 510(i), 1st write completion flag (WCF1) field 511(i), 2nd source field 520(i), 2nd write completion flag (WCF2) field 521(i), 3rd source field 530(i), 3rd write completion flag (WCF3) field 531(i), 4th source field 540(i), 4th write completion flag (WCF4) field 541(i), 1st destination field 55(i), 2nd destination field 56(i), branch tag (BT) field 57(i) and state (S) field 58(i).

The operation field of each IQ entry is designed to hold an operation code.

In the operand field of each IQ entry, in the case of an instruction that shows an operand, which follows the operation code, the operand is written.

Each of 1st - 4th source field of each IQ entry is designed to hold an address of CRF entry allocated to hold source data. In the case of an instruction including a pop operation from the operand stack, addresses of CRF entries allocated to hold data to be popped in compliance with the instruction are written in the order in which they are to be popped.

Each of 1st and 2nd destination field of each IQ entry is designed to hold an address of CRF entry newly allocated in the course of decode-and-set of the instruction. In the case of an instruction including a push operation onto the operand stack, addresses of CRF entries allocated to hold data to be pushed in compliance with the instruction are written in the order in which they are to be pushed.

In each IQ entry, WCF1 - WCF4 field respectively correspond to 1st - 4th source field. WCF1 field is designed to hold "1" in the case that data has already been written in the CRF entry indicated in the 1st source field, and hold "0" otherwise. WCF2 - WCF4 field and 2nd - 4th source field are similarly related.

IQ is furnished with comparators for each source field of each entry, and is so structured that, the content of each source field is compared with the address of each CRF entry into which data is being written, and that each WCF field that corresponds to a source field with an identified content is set to be "1".

The BT field of each IQ entry is concerned with speculative execution based on branch prediction. In this embodiment, as described later, there is a certain relationship between branch tags each written in BT field and entry addresses in the APS history file.

In the S field of each IQ entry, according to the state of the instruction held in the entry, information such as "unexecuted", "executed", "normal termination" and "occurrence of exception" is specified.

(G) Arithmetic Logic Unit (ALU)

The computer system of this embodiment is furnished with ALU0 and ALU1, each of which is designed to perform operations such as arithmetic/logic operations, conversion operations and compare operations delivered from IQ, and which can operate in parallel independently of each other.

The computer system of the present invention can be so structured as to let each ALU have the pipeline processing capability, to be furnished with more ALUs, or to specify types of operations to perform for each ALU.

(H) Branch Unit

The branch unit is so structured that it treats conditional branch instructions delivered from IQ, decides upon whether to branch or not, and notifies the instruction fetch unit.

(I) Load/Store Unit (LSU)

The load/store unit (hereafter, it will be referred to as LSU) has the faculty of performing address calculations, and is so structured as to be able to access the data cache and CRF.

LSU is furnished with a register that holds a pointer to the first local variable (vars register, which is not shown in the figures). In the computer system of this embodiment, though the storage area of the first local variable is either in the data cache or in CRF, the corresponding address in the data cache is written in the vars register. Namely, even in the case that practical storage area of all or part of the local variables is in CRF, each local variable can correspond to an address in the data cache on the assumption that all the local variables were spilt into the data cache. So, in executing a load/store instruction, LSU performs an address calculation referring to the value of the vars register, judges whether the storage area of the object local variable is in the data cache or in CRF, and accesses the storage area. In the case that the storage area is judged to be in CRF, the address of the CRF entry to access is read out of APS.

In the case that a load/store instruction is decoded in the instruction decode-and-set unit, its substance is not only written into the instruction queue but also delivered to LSU.

LSU is furnished with a queue (which is not shown in the figures) that keeps load/store instructions, each together with the entry address in the instruction queue, the object variable name and the data, in the order of the instruction sequencing. This queue has an associative function. Checking dependencies among data-accesses by comparing variable names, LSU can execute load instructions out of order. In the computer system of this embodiment, though the storage area of a local variable is either in the data cache or in CRF, in the case of a load instruction whose object local variable is identical to one written in the above-mentioned queue, the variable data is read out of the above-mentioned queue. As described later, store instructions are executed in order in the completion stage to secure precise handling of exceptions.

LSU is so structured as not only to execute load/store instructions specified in the program, but also to automatically perform spill/fill of the data of the bottom of the stack held in CRF into/from the data cache according to the number of vacancies in APS, CPS and CRF to evade an overflow/underflow.

In the computer system of the first embodiment of the present invention, overflows/underflows of APS, CPS and CRF are evaded in the following manner.

In the case that the number of vacancies in APS, CPS or CRF gets to be smaller than a certain number, the following act is taken to evade an overflow.

Namely, if APS does not hold more than a certain number of CRF entry addresses, or if the content of the entry indicated by BP_OF_PS is not identical between APS and CPS, a signal is forwarded to the instruction fetch unit to suspend the flow of instructions till the above condition gets to be dissolved.

Conversely, if APS holds more than a certain number of CRF entry addresses, and if the content of the entry indicated by BP_OF_PS is identical between APS and CPS, a word of data held in the CRF entry indicated by the content of the entry indicated by BP_OF_PS identical between the two pointer stacks is spilt into the data cache, and the value of BP_OF_PS is increased by one. In addition, the BB field of the above CRF entry is altered to "0", and the address of the entry gets to be registered on FL.

In the case that the number of vacancies in APS, CPS and CRF all gets to be larger than a certain number, to evade an underflow, the last-spilt word of data is taken out of the data cache, a free CRF entry, which has been registered on FL, is assigned to it, and the data is written into the data field. The WCF field and the BB field are set to be "1". In addition, the address of the assigned CRF entry is written into the entry under that indicated by BP_OF_PS both in APS and in CPS, and the value of BP_OF_PS is decreased by one.

Besides, for the purpose of streamlining spill/fill operations between CRF and the data cache, LSU can be so structured as to be furnished with a buffer that temporarily stores data, and to let the buffer keep an appropriate number of words of data.

Described below are the behavior of the computer system of the first embodiment of the present invention.

The computer system of this embodiment processes instructions through four stages: (1)instruction fetch, (2)instruction decode-and-set, (3)execution, and (4)completion. For a while, for the sake of simplicity, on the assumption that up to one instruction can be decoded and set / completed per cycle, the behavior in each stage is described below.

<u>(1) Instruction Fetch Stage</u>

In this stage, the instruction fetch unit fetches an instruction from the instruction cache, and determines the address of the instruction to fetch next. Ordinarily, it is from the next address to fetch next. But, in the case that the instruction fetched is either an unconditional branch instruction or a conditional branch instruction with a branch predicted, that a branch prediction turns out to have missed, or that an exception occurs, the address of the instruction to fetch next is changed.

<u>(2) Instruction Decode-and-Set Stage</u>

In this stage, the system decodes the instruction, manipulates the advanced pointer stack (APS) and the consolidated register file (CRF) in accordance with the instruction, and writes substance of the instruction into the instruction queue (IQ). So whatever operation such as that to generate result data prescribed by the instruction is set to be performed in a data-driven manner. In the following, setting act is described in detail

In the computer system of the present invention, the vicinity of the top of the word stack of a traditional stack machine is reproduced on the pointer stacks and CRF, and the same kind of stack operation as that to be applied originally on the operand stack prescribed by the instruction is applied on APS.

To emulate a push operation of a word of data onto the operand stack, the system allocates a free CRF entry, which has been registered on FL, to hold the data, and pushes the address of the entry onto APS.

In the case of a stack instruction (pop, pop2, dup, dup2, dup_x1, dup2_x1, dup_x2, dup2_x2 and swap defined in Java VM), basically, the same kind of stack operation as that to be applied originally on the operand stack is applied on APS. In this first embodiment, in the case of a stack instruction that involves duplication on the stack (dup, dup2, dup_x1, dup2_x1, dup_x2 and dup2_x2 defined in Java VM), for each duplication of a word, the system allocates a free CRF entry, which has been registered on FL, to hold copy data, and writes the address of the entry into the appropriate APS entry.

In each CRF entry newly allocated in the course of decode-and-set of the instruction, the BB field is altered to "1", and the branch tag forwarded from the instruction decode-and-set unit is written into the C field. In the case of an instruction to push immediate data, as the data is already given, the data is written into the data field, and the WCF field is set to be "1". In the case of any other instruction, as the data is not yet given at the decode-and-set stage, the WCF field is set to be "0".

To let IQ hold substance of the decoded instruction in the order of the instruction sequencing, the substance of the instruction is written into the IQ entry indicated by the setting pointer, and the value of the setting pointer is increased by one. Namely, the operation code is written into the operation field, and in the case of an instruction that shows an operand, which follows the operation code, this operand is written into the operand field. The branch tag forwarded from the instruction decode-and-set unit is written into the BT field. The S field is specified as "executed" in the case of an unconditional branch instruction, an instruction to push immediate data onto the operand stack, or a stack instruction that involves no duplication on the stack (pop, pop2 and swap defined in Java VM), and as "unexecuted" in the case of any other instruction.

In the case of an instruction including a pop operation from the operand stack, addresses of CRF entries popped from APS, to the number of words to be popped, are written into 1st - 4th source field in the order in which they are popped. At this juncture, in regard to each CRF entry whose address is popped from APS, the content of its WCF field is read out and delivered to the corresponding WCF field of IQ.

In the case of an instruction including a push operation onto the operand stack, addresses of CRF entries to be pushed onto APS, to the number of words to be pushed, are written into 1st - 2nd destination field in the order in which they are to be pushed.

In this first embodiment, in the case of a stack instruction that involves duplication on the stack, the address of each CRF entry allocated to hold data to be copied is written into the appropriate source field, and the address of each CRF entry newly allocated to hold copy data is written into the appropriate destination field, in a certain correspondence.

The number of words to be popped from / pushed onto the operand stack (the number of words to be copied in the case of a stack instruction) is fixed for each instruction. So, according to the content of the operation field, it is decided which is/are significant of 1st - 4th source field, WCF1 -WCF4 field and 1st - 2nd destination field.

In the case of a load/store instruction, its substance is not only written into IQ, but also, together with the address of the IQ entry into which the substance is being written, delivered to LSU.

(3) Execution Stage

Unexecuted instructions held in IQ are to be executed in a data-driven manner. Therefore, instructions are executed out of order. For each type of instruction, the behavior in the execution stage is described below.

(a) Instructions to Push Immediate Data onto the Operand Stack

No operation is performed in the execution stage.

(b) Instructions to Load Variable Data onto the Operand Stack

With regard to an IQ entry holding substance of a load instruction, the same substance was delivered to LSU in the instruction decode-and-set stage. LSU is to execute delivered load instructions out of order.

If there is an IQ entry that holds substance of a load instruction requiring an address calculation from data popped from the operand stack (iaload, laload, faload, daload, aaload, baload, caload and saload defined in Java VM), and in which each WCF field corresponding to a significant source field holds "1" (source data have fully been written in CRF), the source data obtained by accessing CRF, together with the IQ entry address, are transmitted to LSU. LSU carries out the address calculation from the transmitted source data, and attempts loading.

After acquired by LSU, the variable data is written into the data field of the destination CRF entry, whose WCF field is altered to "1". Besides, in IQ, the content of each source field is compared with the address of the destination CRF entry, each WCF field that corresponds to a source field with an identified content is set to be "1" Here, in the IQ entry into which an instruction is being written in the same cycle, contents that are being written are compared. After the above acts are finished normally, the S field of the IQ entry that holds the load instruction is altered to "normal termination".

(c) Instructions to Store Data on the Operand Stack into Variables

If there is an IQ entry that holds substance of a store instruction, and in which each WCF field corresponding to a significant source field holds "1" (source data have fully been written in CRF), the source data obtained by accessing CRF, together with the IQ entry address, are transmitted to LSU.

In the case of a store instruction requiring an address calculation from data popped from the operand stack (iastore, lastore, fastore, dastore, aastore, bastore, castore and sastore defined in Java VM), LSU carries out the address calculation from the transmitted source data.

After the above acts are finished normally, the S field of the IQ entry that holds the store instruction is altered to "store executable".

To secure precise handling of exceptions, the actual store act will be performed in the completion stage.

(d) Instructions to Generate Result Data

If there is an IQ entry that holds substance of an instruction to generate result data, and in which each WCF field corresponding to a significant source field holds "1" (source data have fully been written in CRF), and if an arithmetic logic unit (ALU) is available, the substance of the IQ entry, together with the IQ entry address and the source data obtained by accessing CRF, is transmitted to the ALU to be processed.

After the operation is finished normally, the result is written into the data field of the destination CRF entry, and the WCF field is altered to "1". Besides, in IQ, comparisons of CRF entry addresses and alteration of WCF field are made in the same manner as in the case of load instructions described above. After the above acts are finished normally, the S field of the IQ entry that holds the instruction is altered to "normal termination".

(e) Stack Instructions

With regard to stack instructions that involve no duplication on the stack, no operation is performed in the execution stage.

In this first embodiment, if there is an IQ entry that holds substance of a stack instruction that involves duplication on the stack, and in which each WCF field corresponding to a significant source field holds "1" (source data have fully been written in CRF), data is read out of each CRF entry indicated in a significant source field, and each written into the data field of the CRF entry indicated in the corresponding destination field, and the WCF field is altered to "1". Besides, in IQ, comparisons of CRF entry addresses and alteration of WCF field are made in the same manner as in the case of load instructions described above. After the above acts are finished normally, the S field of the IQ entry that holds the stack instruction is altered to "normal termination".

(f) Branch Instructions

With regard to unconditional branch instructions, no operation is performed in the execution stage.

If there is an IQ entry that holds substance of a conditional branch instruction, and in which each WCF field corresponding to a significant source field holds "1" (source data have fully been written in CRF), the substance of the IQ entry, together with the IQ entry address and the source data obtained by accessing CRF, is transmitted to the branch unit to be processed.

After the calculation of the conditional expression is finished normally in the branch unit, the result, together with the address to branch to, is communicated to the instruction fetch unit. After the above acts are finished normally, the S field of the IQ entry that holds the conditional branch instruction is altered to "normal termination".

As described above, each of unexecuted instructions held in IQ is to be executed after becomes executable. Therefore, instructions are executed out of order. Besides, functional units - arithmetic logic unit 0/1, branch unit, and load/store unit - operate in parallel independently of each other.

In the case of an occurrence of an exception in executing an instruction, this information is written into the S field of the IQ entry that holds the instruction, and the exception vector is communicated to the instruction fetch unit.

<u>(4) Completion Stage</u>

An instruction can be completed, only when all the instructions before the instruction in the order of the instruction sequencing are completed.

When the content of the S field is/becomes "executed" or "normal termination" in the IQ entry indicated by the completion pointer, CPS and CRF are manipulated in accordance with the substance of the instruction written in the entry, and the value of the completion pointer is increased by one.

CPS is manipulated to reproduce the operation that was applied on APS in the course of decode-and-set of the instruction. Namely, in the case of an instruction including a pop / push operation, the same content as in each significant source field is popped from CPS in order, and the content of each significant destination field is pushed onto CPS in order. In the case of a stack instruction that involves no duplication on the stack, the same operation as that to be applied originally on the operand stack is applied on CPS. In this first embodiment, in the case of a stack instruction that involves duplication on the stack, referring to each significant source field and destination field, the operation that was applied on APS in the course of decode-and-set of the instruction is reproduced on CPS.

In this first embodiment, in compliance with the above-mentioned manipulation applied on CPS, with regard to each CRF entry whose address is popped from CPS, the BB field is altered to "0", and the entry address gets to be registered on FL.

In the case that the IQ entry indicated by the completion pointer holds a store instruction, when the content of the S field is/becomes "store executable", the system, showing the address of the IQ entry that holds the store instruction, requests LSU to perform the actual store. Then, in-order store of data can be secured. Besides, CPS and CRF are manipulated in the same manner as above, and the value of the completion pointer is increased by one.

As described above, the instruction that has been held in the IQ entry dequeued by adding one to the value of the completion pointer is taken as completed. As all the instructions that had been decoded and set before the instruction have been completed, instructions are completed in order.

In the case that the content of the S field is/becomes "occurrence of exception" in the IQ entry indicated by the completion pointer, the virtual state at the point of the occurrence of exception on the assumption that the program was being executed in order can be constructed by means of CPS and CRF at that point, precise handling of exceptions can be materialized. To cancel all the instructions that have been decoded and set after the instruction that caused an exception, allocation of each CRF entry indicated in a significant destination field of an IQ entry holding an instruction to be canceled is removed by altering the BB field back to "0" and registering the entry address on FL, and all the IQ entries holding an instruction to be canceled are dequeued by writing the value of the completion pointer plus one into the setting pointer.

The above is an overall description of the behavior of the computer system of the first embodiment of the present invention. Next, an example action is described below.

Now, let's consider executing the following program with the computer system of this first embodiment.

| | |
|---|---|
| dload [A]; | load of double-precision floating point data corresponding to variable name [A] |
| dload [B] ; | load of double-precision floating point data corresponding to variable name [B] |
| dadd ; | add between double-precision floating point data |
| d2f ; | conversion from double-precision floating point data to single-precision floating point data |
| fload [T] ; | load of single-precision floating point data corresponding to variable name [T] |
| dup_x1 ; | duplicate the top word on the stack and insert the copy below the second-from-top word |
| fdiv ; | divide between single-precision floating point data |

fsub ; subtract between single-precision floating point data

fstore [X] ; store of single-precision floating point data on the top of the stack into the area corresponding to variable name [X]

The above program is to compute X=T-(A+B)/T , where data of A and B are given and added as double-precision floats, the result is converted into a single-precision float, and the rest goes on in single-precision float.

Fig. 6 - 12 show acts of the computer system of this first embodiment, at each cycle in the course of execution of the above program. Referring to these figures, detailed action is described below. In Fig. 6 - 12, the structure of each entry of CRF 6 / IQ 5 is the same as in Fig. 3 / Fig. 5. In Fig. 6- 12, blank fields mean no need for attention to their own contents. In order to refer to contents of each component with progress, each reference numeral is followed by a hyphen and a cyclewise increasing number. And, in Fig. 6 - 12, the entries of APS/CPS/IQ/CRF are tagged with address 0, 1, 2, ... from bottom up.

In this example action, for the sake of simplicity, all the variable data are stored in the data cache, and no spill/fill operation between CRF and the data cache is performed. Therefore, the value of BP_OF_PS is "0" from beginning to end.

Besides, in this example action, at the outset, APS, CPS, IQ and CRF are initialized, and all the CRF entry addresses are written in FL in order (namely, {〈0〉, 〈1〉, 〈2〉, 〈3〉, ..... }), and they will be taken out in this order.

In the following, acts in each cycle are described in detail for individual stages: (A) instruction decode-and-set, (B) execution, and (C) completion.

<u>(1-A) Instruction Decode-and-Set Stage in the 1st cycle</u>

Instruction dload [A] is decoded and set. As it is an instruction to load two-word variable data onto the operand stack, two free CRF entries 6(0), 6(1), which have been registered on FL, are allocated to hold the data, and entry addresses 〈0〉, 〈1〉 are pushed onto APS. Then, APS turns out as 3-1.

In each of CRF entries 6(0), 6(1), the BB field is altered to "1", and "0" is entered in the WCF field and in the C field. Then, CRF turns out as 6-1. Here in this example action, from beginning to end, as branch tag, "0" is forwarded from the instruction decode-and-set unit.

As the value of the setting pointer is "0", substance of the above instruction is written into IQ entry 5(0). Then, IQ turns out as 5-1. At this juncture, CRF entry addresses 〈0〉, 〈1〉, which are being pushed onto APS, are written into 1st and 2nd destination field, respectively. Besides, increased by one, the value of the setting pointer gets to be "1". Here in this example action, the S field of each IQ entry is supposed to be "0" if the instruction is unexecuted, and "1" if the instruction is executed, normally terminated, or store executable in the case of a store instruction.

The same substance of the above instruction that is being written into IQ entry 5(0), together with IQ entry address "0", is delivered to LSU.

<u>(1-B) Execution Stage in the 1st cycle</u>

In IQ at the outset, as there is no entry in which an executable instruction is written, no operation of the execution stage is performed.

<u>(1-C) Completion Stage in the 1st cycle</u>

In IQ at the outset, as no instruction has been written in entry 5(0), which is indicated by the completion pointer, no operation of the completion stage is performed.

<u>(2-A) Instruction Decode-and-Set Stage in the 2nd cycle</u>

Instruction dload [B] is decoded and set. As it is an instruction to load two-word variable data onto the operand stack, two free CRF entries 6(2), 6(3), which have been registered on FL, are allocated to hold the data, and entry addresses 〈2〉, 〈3〉 are pushed onto APS. Then, APS turns out as 3-2.

In each of CRF entries 6(2), 6(3), the BB field is altered to "1", and "0" is entered in the WCF field and in the C field. Then, CRF turns out as 6-2.

As the value of the setting pointer is "1", substance of the above instruction is written into IQ entry 5(1). Then, IQ turns out as 5-2. At this juncture, CRF entry addresses 〈2〉, 〈3〉, which are being pushed onto APS, are written into 1st and 2nd destination field, respectively. Besides, increased by one, the value of the setting pointer gets to be "2".

The same substance of the above instruction that is being written into IQ entry 5(1), together with IQ entry address "1", is delivered to LSU.

<u>(2-B) Execution Stage in the 2nd cycle</u>

LSU sets about accessing variable A, whose latency is 2 cycle.

<u>(2-C) Completion Stage in the 2nd cycle</u>

In IQ in state 5-1, as the content of the S field is "0" in entry 5(0), which is indicated by the completion pointer, no operation of the completion stage is performed.

(3-A) Instruction Decode-and-Set Stage in the 3rd cycle

Instruction dadd is decoded and set. As it is an instruction to pop four words of source data from the operand stack, operate on them and push the two-word result, 〈0〉, 〈1〉, 〈2〉 and 〈3〉 are popped from APS, two free CRF entries 6(4), 6(5), which have been registered on FL, are allocated to hold the result, and entry addresses 〈4〉, 〈5〉 are pushed onto APS. Then, APS turns out as 3-3.

In each of CRF entries 6(4), 6(5), the BB field is altered to "1", and "0" is entered in the WCF field and in the C field.

As the value of the setting pointer is "2", substance of the above instruction is written into IQ entry 5(2). At this juncture, CRF entry addresses 〈0〉, 〈1〉, 〈2〉, 〈3〉, which are being popped from APS, are written into 1st - 4th source field, and 〈4〉 and 〈5〉, which are being pushed onto APS, are written into 1st and 2nd destination field, respectively. And, WCF-field contents of entries 6(0), 6(1), 6(2), 6(3) of CRF in state 6-2 are read out and respectively delivered to WCF1 - WCF4 field of IQ. Besides, increased by one, the value of the setting pointer gets to be "3".

(3-B) Execution Stage in the 3rd cycle

LSU sets about accessing variable B, whose latency is 2 cycle.

Two words A_1, A_2 which constitute the data of variable A are conveyed from LSU, and respectively written into the data field of CRF entries 6(0), 6(1), in each of which the WCF field is altered to "1". Besides, in IQ, the content of each source field is compared with CRF entry addresses 〈0〉, 〈1〉. In this case, because identified in 1st and 2nd source field of IQ entry 5(2), into which an instruction is being written in the same cycle, WCF1 and WCF2 field of the entry are set to be "1". (In regard to WCF3 and WCF4 field, as explained in (3-A), WCF-field contents of corresponding entries of CRF in state 6-2 are being read out and delivered. So, they are written.)

As above, execution of the instruction held in IQ entry 5(0) is finished normally, so the S field of 5(0) is altered to "1" that means normal termination.

(3-C) Completion Stage in the 3rd cycle

In IQ in state 5-2, as the content of the S field is "0" in entry 5(0), which is indicated by the completion pointer, no operation of the completion stage is performed.

(4-A) Instruction Decode-and-Set Stage in the 4th cycle

Instruction d2f is decoded and set. As it is an instruction to pop two words of source data from the operand stack, convert them and push a word of result, 〈4〉 and 〈5〉 are popped from APS, free CRF entry 6(6), which has been registered on FL, is allocated to hold the result, and entry address 〈6〉 is pushed onto APS. Then, APS turns out as 3-4.

In CRF entry 6(6), the BB field is altered to "1", and "0" is entered in the WCF field and in the C field.

As the value of the setting pointer is "3", substance of the above instruction is written into IQ entry 5(3). At this juncture, CRF entry addresses 〈4〉, 〈5〉, which are being popped from APS, are respectively written into 1st and 2nd source field, and 〈6〉, which is being pushed onto APS, is written into 1st destination field. And, WCF-field contents of entries 6(4), 6(5) of CRF in state 6-3 are read out and respectively delivered to WCF1 and WCF2 field of IQ. Besides, increased by one, the value of the setting pointer gets to be "4".

(4-B) Execution Stage in the 4th cycle

Two words B_1, B_2 which constitute the data of variable B are conveyed from LSU, and respectively written into the data field of CRF entries 6(2), 6(3), in each of which the WCF field is altered to "1". Besides, in IQ, the content of each source field is compared with CRF entry addresses 〈2〉, 〈3〉. In this case, because identified in 3rd and 4th source field of IQ entry 5(2), WCF3 and WCF4 field of the entry are set to be "1".

As above, execution of the instruction held in IQ entry 5(1) is finished normally, so the S field of 5(1) is altered to "1" that means normal termination.

(4-C) Completion Stage in the 4th cycle

In IQ in state 5-3, as the content of the S field has become "1" in entry 5(0), which is indicated by the completion pointer, CPS (and CRF) is/are manipulated in accordance with the substance of 5(0). Namely, 〈0〉 and 〈1〉, which are written in destination fields of IQ entry 5(0), are pushed onto CPS. Then, CPS turns out as 4-4. Besides, increased by one, the value of the completion pointer gets to be "1". Thus, the instruction held in 5(0) is completed.

(5-A) Instruction Decode-and-Set Stage in the 5th cycle

Instruction fload [T] is decoded and set. As it is an instruction to load a word of variable data onto the operand stack, free CRF entry 6(7), which has been registered on FL, is allocated to hold the data, and entry address 〈7〉 is pushed onto APS. Then, APS turns out as 3-5.

In CRF entry 6(7), the BB field is altered to "1", and "0" is entered in the WCF field and in the C field,

As the value of the setting pointer is "4" substance of the above instruction is written into IQ entry 5(4). At this juncture, CRF entry address 〈7〉, which is being pushed onto APS, is written into 1st destination field. Besides, increased by one, the value of the setting pointer gets to be "5".

The same substance of the above instruction that is being written into IQ entry 5(4), together with IQ entry address "4", is delivered to LSU.

(5-B) Execution Stage in the 5th cycle

In IQ in state 5-4, as each of the WCF-field contents is "1" in entry 5(2), in which an arithmetic instruction is written, the substance of entry 5(2), together with entry address "2" and the source data written in CRF entries 6(0), 6(1), 6(2), 6(3), is transmitted to ALU0, which is made set about the arithmetic operation. The latency of this operation is 2 cycle.

(5-C) Completion Stage in the 5th cycle

In IQ in state 5-4, as the content of the S field has become "1" in entry 5(1), which is indicated by the completion pointer, CPS (and CRF) is/are manipulated in accordance with the substance of 5(1). Namely, 〈2〉 and 〈3〉, which are written in destination fields of IQ entry 5(1), are pushed onto CPS. Then, CPS turns out as 4-5. Besides, increased by one, the value of the completion pointer gets to be "2". Thus, the instruction held in 5(1) is completed.

(6-A) Instruction Decode-and-Set Stage in the 6th cycle

Instruction dup_x1 is decoded and set. Instruction dup_x1 is a stack instruction to turn state of the word stack from { ....., word1, word2 } (growing toward the right) to ( ....., word2, word1, word2 }, which makes a copy of a word of data on the stack. So, free CRF entry 6(8), which has been registered on FL, is allocated to hold copy data. And, state of APS is turned from {〈6〉, 〈7〉 } (from bottom up) as 3-5 to {〈8〉, 〈6〉, 〈7〉 } as 3-6.

In CRF entry 6(8), the BB field is altered to "1", and "0" is entered in the WCF field and in the C field.

As the value of the setting pointer is "5", substance of the above instruction is written into IQ entry 5(5). At this juncture, CRF entry address 〈7〉, which is allocated to hold data to be copied, is written into 1st source field, and CRF entry address 〈8〉, which is being newly allocated to hold copy data, is written into 1st destination field. And, WCF-field content of entry 6(7) of CRF in state 6-5 is read out and delivered to WCF1 field of IQ. Besides, increased by one, the value of the setting painter gets to be "6".

(6-B) Execution Stage in the 6th cycle

LSU sets about accessing variable T, whose latency is 2 cycle.

If execution of the arithmetic instruction of 5(2) has been finished normally in ALU0, two words (A+B)_1, (A+B)_2 which constitute the result are conveyed, and respectively written into the data field of CRF entries 6(4), 6(5), in each of which the WCF field is altered to "1". Besides, in IQ, the content of each source field is compared with CRF entry addresses 〈4〉, 〈5〉. In this case, because identified in 1st and 2nd source field of IQ entry 5(3), WCF1 and WCF2 field of the entry are set to be "1".

As above, execution of the instruction held in IQ entry 5(2) is finished normally, so the S field of 5(2) is altered to "1" that means normal termination.

(6-C) Completion Stage in the 6th cycle

In IQ in state 5-5, as the content of the S field is "0" in entry 5(2), which is indicated by the completion pointer, no operation of the completion stage is performed.

(7-A) Instruction Decode-and-Set Stage in the 7th cycle

Instruction fdiv is decoded and set. As it is an arithmetic instruction to pop two words of source data from the operand stack, operate on them and push a word of result, 〈6〉 and 〈7〉 are popped from APS, free CRF entry 6(9), which has been registered on FL, is allocated to hold the result, and entry address 〈9〉 is pushed onto APS. Then, APS turns out as 3-7.

In CRF entry 6(9), the BB field is altered to "1", and "0" is entered in the WCF field and in the C field.

As the value of the setting pointer is "6", substance of the above instruction is written into IQ entry 5(6). At this juncture, CRF entry addresses 〈6〉, 〈7〉, which are being popped from APS, are respectively written into 1st and 2nd source field, and 〈9〉, which is being pushed onto APS, is written into 1st destination field. And, WCF-field contents of entries 6(6), 6(7) of CRF in state 6-6 are read out and respectively delivered to WCF1 and WCF2 field of IQ. Besides, increased by one, the value of the setting pointer gets to be "7".

(7-B) Execution Stage in the 7th cycle

In IQ in state 5-6, as each of the significant WCF-field contents is "1" in entry 5(3), in which an instruction to generate a result is written, the substance of entry 5(3), together with entry address "3" and the source data written in CRF entries 6(4), 6(5), is transmitted to ALU0, which is made set about the operation. The latency of this operation is 2 cycle.

Data of variable T is conveyed from LSU, and written into the data field of CRF entry 6(7), in which the WCF field is altered to "1". Besides, in IQ, the content of each source field is compared with CRF entry address 〈7〉. In this case, because identified in 1st source field of IQ entry 5(5) and in 2nd source field of 5(6), into which an instruction is being written in the same cycle, WCF1 field of 5(5) and WCF2 field of 5(6) are set to be "1". (In regard to WCF1 field of 5(6), as explained in (7-A), WCF-field content of entry 6(6) of CRF in state 6-6 is being read out and delivered. So, it is written.)

As above, execution of the instruction held in IQ entry 5(4) is finished normally, so the S field of 5(4) is altered to "1" that means normal termination.

(7-C) Completion Stage in the 7th cycle

In IQ in state 5-6, as the content of the S field has become "1" in entry 5(2), which is indicated by the completion pointer, CPS and CRF are manipulated in accordance with the substance of 5(2). Namely, 〈0〉, 〈1〉, 〈2〉 and 〈3〉, which are written in source fields of IQ entry 5(2), are popped from CPS, and 〈4〉 and 〈5〉, which are written in destination fields, are pushed onto CPS. Then, CPS turns out as 4-7. In each of CRF entries 6(0), 6(1), 6(2), 6(3), whose respective addresses are being popped from CPS, the BB field is altered to "0". CRF entry addresses 〈0〉, 〈1〉, 〈2〉, 〈3〉 get to be registered on FL. Besides, increased by one, the value of the completion pointer gets to be "3". Thus, the instruction held in 5(2) is completed.

(8-A) Instruction Decode-and-Set Stage in the 8th cycle

Instruction fsub is decoded and set. As it is an arithmetic instruction to pop two words of source data from the operand stack, operate on them and push a word of result 〈8〉 and 〈9〉 are popped from APS, free CRF entry 6(10), which has been registered on FL, is allocated to hold the result and entry address 〈10〉 is pushed onto APS. Then, APS turns out as 3-8.

In CRF entry 6(10), the BB field is altered to "1", and "0" is entered in the WCF field and in the C field.

As the value of the setting pointer is "7", substance of the above instruction is written into IQ entry 5(7). At this juncture, CRF entry addresses 〈8〉, 〈9〉, which are being popped from APS, are respectively written into 1st and 2nd source field, and 〈10〉, which is being pushed onto APS, is written into 1st destination field. And, WCF-field contents of entries 6(8), 6(9) of CRF in state 6-7 are read out and respectively delivered to WCF1 and WCF2 field of IQ. Besides, increased by one, the value of the setting pointer gets to be "8".

(8-B) Execution Stage in the 8th cycle

If execution of the conversion instruction of 5(3) has been finished normally in ALU0, a word of result (A+B) is conveyed, and written into the data field of CRF entry 6(6), in which the WCF field is altered to "1". Besides, in IQ, the content of each source field is compared with CRF entry address 〈6〉. In this case, because identified in 1st source field of IQ entry 5(6), WCF1 field of the entry is set to be "1".

As above, execution of the instruction held in IQ entry 5(3) is finished normally, so the S field of 5(3) is altered to "1" that means normal termination.

In IQ in state 5-7, as the content of the significant WCF field is "1" in entry 5(5), in which a stack instruction that involves duplication on the stack is written, duplication of data is performed. Namely, data is read out of CRF entry 6(7), and written into the data field of CRF entry 6(8), in which the WCF field is altered to "1". Besides, in IQ, the content of each source field is compared with CRF entry address 〈8〉. In this case, because identified in let source field of IQ entry 5(7), into which an instruction is being written in the same cycle, WCF1 field of the entry is set to be "1". (In regard to WCF2 field, as explained in (8-A), WCF-field content of entry 6(9) of CRF in state 6-7 is being read out and delivered. So, it is written.) The S field of IQ entry 5(5) is altered to "1" that means normal termination.

(8-C) Completion Stage in the 8th cycle

In IQ in state 5-7, as the content of the S field is "0" in entry 5(3), which is indicated by the completion pointer, no operation of the completion stage is performed.

(9-A) Instruction Decode-and-Set Stage in the 9th cycle

Instruction fstore [X] is decoded and set. As it is an instruction to store a word of data on the top of the stack, 〈10〉 is popped from APS. Then, APS turns out as 3-9.

As the value of the setting pointer is "8", substance of the above instruction is written into IQ entry 5(8). At this juncture, CRF entry address 〈10〉, which is being popped from APS, is written into 1st source field. And, WCF-field content of entry 6(10) of CRF in state 6-8 is read out and delivered to WCF1 field of IQ. Besides, increased by one, the value of the setting pointer gets to be "9".

The same substance of the above instruction that is being written into IQ entry 5(8), together with IQ entry address "8", is delivered to LSU.

(9-B) Execution Stage in the 9th cycle

In IQ in state 5-8, as each of the significant WCF-field contents is "1" in entry 5(6), in which an arithmetic instruction is written, the substance of entry 5(6), together with entry address "6" and the source data written in CRF entries 6(6), 6(7), is transmitted to ALU1, which is made set about the operation. The latency of this operation is 10 cycle.

(9-C) Completion Stage in the 9th cycle

in IQ in state 5-8, as the content of the S field has become "1" in entry 5(3), which is indicated by the completion pointer, CPS and CRF are manipulated in accordance with the substance of 5(3). Namely, 〈4〉 and 〈5〉, which are written in source fields of IQ entry 5(3), are popped from CPS, and 〈6〉, which is written in a destination field, is pushed onto CPS. Then, CPS turns out as 4-9. In each of CRF entries 6(4), 6(5), whose respective addresses are being popped from CPS, the BB field is altered to "0". CRF entry addresses 〈4〉, 〈5〉 get to be registered on FL. Besides, increased by one, the value of the completion pointer gets to be "4". Thus, the instruction held in 5(3) is completed.

(10-C) Completion Stage in the 10th cycle

In IQ in state 5-9, as the content of the S field is "1" in entry 5(4), which is indicated by the completion pointer, CPS (and CRF) is/are manipulated in accordance with the substance of 5(4). Namely, 〈7〉, which is written in a destination field of IQ entry 5(4), is pushed onto CPS. Then, CPS turns out as 4-10. Besides, increased by one, the value of the completion pointer gets to be "5". Thus, the instruction held in 5(4) is completed.

(11-C) Completion Stage in the 11th cycle

In IQ in state 5-10, as the content of the S field is "1" in entry 5(5), which is indicated by the completion pointer, CPS (and CRF) is/are manipulated in accordance with the substance of 5(5). Namely, the act of APS in (6-A) is reproduced, then CPS turns out as 4-11. Besides, increased by one, the value of the completion pointer gets to be "6". Thus, the instruction held in 5(5) is completed.

(18-B) Execution Stage in the 18th cycle

If execution of the arithmetic instruction of 5(6) has been finished normally in ALU1, a word of result (A+B)/T is conveyed, and written into the data field of CRF entry 6(9), in which the WCF field is altered to "1". Besides, in IQ, the content of each source field is compared with CRF entry address 〈9〉. In this case, because identified in 2nd source field of IQ entry 5(7), WCF2 field of the entry is set to be "1".

As above, execution of the instruction held in IQ entry 5(6) is finished normally, so the S field of 5(6) is altered to "1" that means normal termination.

(19-B) Execution Stage in the 19th cycle

In IQ in state 5-18, as each of the significant WCF-field contents is "1" in entry 5(7), in which an arithmetic instruction is written, the substance of entry 5(7), together with entry address "7" and the source data written in CRF entries 6(8), 6(9), is transmitted to ALU0, which is made set about the operation. The latency of this operation is 2 cycle.

(19-C) Completion Stage in the 19th cycle

In IQ in state 5-18, as the content of the S field has become "1" in entry 5(6), which is indicated by the completion pointer, CPS and CRF are manipulated in accordance with the substance of 5(6). Namely, 〈6〉 and 〈7〉, which are written in source fields of IQ entry 5(6), are popped from CPS, and 〈9〉, which is written in a destination field, is pushed onto CPS. Then, CPS turns out as 4-19. In each of CRF entries 6(6), 6(7), whose respective addresses are being popped from CPS, the BB field is altered to "0". CRF entry addresses 〈6〉, 〈7〉 get to be registered on FL. Besides, increased by one, the value of the completion pointer gets to be "7". Thus, the instruction held in 5(6) is completed.

(20-B) Execution Stage in the 20th cycle

If execution of the arithmetic instruction of 5(7) has been finished normally in ALU0, a word of result T-(A+B)/T is conveyed, and written into the data field of CRF entry 6(10), in which the WCF field is altered to "1". Besides, in IQ, the content of each source field is compared with CRF entry address 〈10〉. In this case, because identified in 1st source field of IQ entry 5(8), WCF1 field of the entry is set to be "1".

As above, execution of the instruction held in IQ entry 5(7) is finished normally, so the S field of 5(7) is altered to "1" that means normal termination.

(21-B) Execution Stage in the 21st cycle

In IQ in state 5-20, as the content of the significant WCF field is "1" in entry 5(8), in which a store instruction is written, the source data written in CRF entry 6(10), together with IQ entry address "8", is transmitted to LSU. The S field of 5(8) is altered to "1" that means store executable.

(21-C) Completion Stage in the 21st cycle

In IQ in state 5-20, as the content of the S field has become "1" in entry 5(7), which is indicated by the completion pointer, CPS and CRF are manipulated in accordance with the substance of 5(7). Namely, 〈8〉 and 〈9〉, which are written in source fields of IQ entry 5(7), are popped from CPS, and 〈10〉, which is written in a destination field, is pushed onto CPS. Then, CPS turns out as 4-21. In each of CRF entries 6(8), 6(9), whose respective addresses are being popped from CPS, the BB field is altered to "0". CRF entry addresses 〈8〉, 〈9〉 get to be registered on FL. Besides, increased by one, the value of the completion pointer gets to be "8". Thus, the instruction held in 5(7) is completed.

(22-C) Completion Stage in the 21nd cycle

In IQ in state 5-21, as a store instruction is written and the content of the S field has become "1" in entry 5(8), which is indicated by the completion pointer, the system, showing IQ entry address "8", requests LSU to perform the store into the data cache. And, CPS and CRF are manipulated in accordance with the substance of 5(8). Namely, 〈10〉, which is written in a source field of IQ entry 5(8), is popped from CPS. Then, CPS turns out as 4-22. In CRF entry 6(10), whose address is being popped from CPS, the BB field is altered to "0". CRF entry address 〈10〉 gets to be registered on FL. Besides, increased by one, the value of the completion pointer gets to be "9". Thus, the instruction held in 5(8) is completed.

Now, computation of X=T-(A+B)/T is concluded in the computer system of this first embodiment.

Speculative execution based on branch prediction can be incarnated in the computer system of the present invention. Furnishing with an APS history file is for incarnation of speculative execution. Each time a conditional branch instruction is decoded, contents of all the APS entries and PP_OF_APS are written into an entry of the APS history file. In the following, how speculative execution based on branch prediction goes on in the computer system of this embodiment is described.

As stated above, in the instruction decode-and-set stage, the computer system of this embodiment decodes an instruction, manipulates APS and CRF in accordance with the instruction, and writes substance of the instruction into IQ. From in the initialized state, after which instructions start to flow, and till the first conditional branch instruction is decoded, as branch tag, "0" is attached to each decoded instruction, and written into the BT field of the IQ entry into which substance of the instruction is being written, and into the C field of each allocated CRF entry.

When the first conditional branch instruction is decoded and branch prediction is conducted, to preserve the state at the branch point, contents of all the APS entries and PP_OF_APS are written into the entry of address 0 of the APS history file. In the course of the instruction sequence grounded on the above branch prediction, with "1" attached as branch tag, IQ and CRF are set.

When the second conditional branch instruction is decoded, in either the case that the first conditional branch instruction is unsettled or the case that it has been settled and the prediction proved right, contents of all the APS entries and PP_OF_APS are written into the entry of address 1 of the APS history file. In the course of the instruction sequence grounded on the second branch prediction, with "2" attached as branch tag, IQ and CRF are set.

If branch prediction continues to make a hit, the process goes on in the same manner, writing into the APS history file is carried out in the order of address. Besides, after writing into the entry of address n of the APS history file, and till the next writing, as branch tag, n+1 is attached to each decoded instruction.

In the case that a branch prediction turns out to have missed, the instructions transmitted to functional units - ALUs, branch unit, and LSU - that are identified as decoded after the conditional branch instruction by their respectively attached branch tags are canceled; in CRF, the content of each C field is compared with the branch tags, and the BB field is altered to "0" in each identified entry, whose address gets to be registered on FL; the instructions decoded and set after the conditional branch instruction are invalidated by altering the value of the setting pointer of IQ to the address of the entry next to that in which the conditional branch instruction is written. And moreover, in each APS entry whose content is not identical with that of the CPS entry of the same address and in PP_OF_APS, the content is altered to the corresponding content of the APS history file that was written when the conditional branch instruction was decoded, and the process is resumed from the instruction at the right place.

As above, in the computer system of the present invention, as the state at each point when a conditional branch instruction is decoded and branch prediction is conducted can be reconstructed by utilizing the APS history file, speculative execution based on branch prediction is feasible.

The above is described assuming that at most one instruction can be decoded and set / completed per cycle for the sake of simplicity. The computer system of the present invention can be so structured that a plurality of instructions can be decoded and set / completed simultaneously. Namely, if FL is constructed as a FIFO queue, the order in which addresses of free CRF entries are taken out of FL for allocation is definite. So, a plurality of instructions can be simultaneously decoded and set by grasping substance of stack operations, i.e. how many words to be popped/pushed for each instruction. Besides, in regard to completion of instructions, as the stack operation to be applied on CPS for each instruction has been rigidly determined in advance, simultaneous completion of a plurality of instructions can be incarnated more easily.

The more the number of instructions that the system is structured to be able to decode and set / complete simultaneously, the more complicated control circuits of the instruction decode-and-set unit, etc. become, and the more amount of hardware is required in respect to the number of ports of each of the register files that constitute IQ, CRF, etc., the number of comparators with which IQ is furnished for each source field of each entry, the number of ALUs, the number of buses by which components are connected, and so forth.

The computer system of the present invention can be so structured that decode-and-set is conducted in two stages, in the first one of which substances of a plurality of instructions that are simultaneously decoded and set are converted into an integrated form.

For example, in the case that the system is so structured as to be able to decode and set up to thee instructions per cycle, the above-mentioned program to compute X=T-(A+B)/T is converted into the form as diagrammed in Fig. 13. Shown in each row of the diagram of Fig. 13 are the increase in PP_OF_APS, the manipulation to be applied on APS and the substances to be written into three IQ entries that are derived from three instructions to be decoded and set simultaneously. Here, the contents of APS just before setting are denoted as { ....., s2, s1, s0 } (the right end is the top of the stack), and the contents of the free list, which is constructed as a FIFO queue, are denoted as { f1, f2, f3, ..... } (in the order in which they are to be taken out). For each of f1, f2, f3, ... and s0, s1, s2, ..., the corresponding CRF entry address is to be written into APS/IQ in the later stage of decode-and-set. The top of stack APS is to shift as indicated in the column of increase in PP_OF_APS, while in the column of manipulation to be applied on APS, the right end is to correspond to the top of the stack after the shift. And, NC stands for No Change.

Next, the computer system of the second embodiment of the present invention is described.

The second embodiment differs from the first embodiment in the way of dealing with stack instructions.

In the computer system of the second embodiment, the structure of each entry of the consolidated register file (CRF) 6 differs from that in the first embodiment, though the advanced pointer stack (APS) 3, the completed pointer stack (CPS) 4 and the instruction queue (IQ) 5, as well as the basic construction of the system, each have the same structure as in the first embodiment.

Fig. 14 illustrates the detailed structure of entry 6(i) of CRF 6 in this second embodiment. Here, "i" stands for entry address. Each entry 6(i) of CRF 6 comprises data field 61(i), write completion flag (WCF) field 62(i), color (C) field 63(i), busy bit (BB) field 64(i) and number of reference (NR) field 65(i).

The WCF, C and BB field, as well as the data field, of each CRF entry are respectively identical to those in the first embodiment.

The NR field of each CRF entry is designed to hold the number of CPS entries holding the address of the CRF entry.

Namely, in compliance with spill/fill operations between CRF and the data cache and with manipulation applied on CPS on account of completion of instructions, in each relevant CRF entry, the number of CPS entries holding the address of the CRF entry is varied.

In the second embodiment, a spill operation of a word of data from CRF into the data cache is performed as follows. On condition that the content of the entry indicated by BP_OF_PS is identical between APS and CPS, a word of data held in the CRF entry indicated by the content of the entry indicated by BP_OF_PS identical between the two pointer stacks is spilt into the data cache, and the value of BP_OF_PS is increased by one. In addition, the value of the NR field of the above CRF entry is decreased by one. If the value turns out to be "0", the BB field of this CRF entry is altered to "0", and the address of this entry gets to be registered on FL.

Conversely, a fill operation of a word of data from the data cache into CRF is performed as follows. Namely, the last-spilt word of data is taken out of the data cache, a free CRF entry, which has been registered on FL, is assigned to it, and the data is written into the data field. The WCF, NR and BB field are set to be "1". In addition, the address of the assigned CRF entry is written into the entry under that indicated by BP_OF_PS both in APS and in CPS, and the value of BP_OF_PS is decreased by one.

Besides, the computer system of the second embodiment processes instructions in a manner that is almost the same as in the first embodiment. By specifying the differences from the first embodiment for each stage, the behavior of the computer system of the second embodiment is described below.

(1) Instruction Fetch Stage

Same as in the first embodiment.

(2) Instruction Decode-and-Set Stage

Same as in the first embodiment except for the following points.

- In each CRF entry newly allocated in the course of decode-and-set of an instruction, "0" is entered in the NR field.
- In the case of a stack instruction, the same operation as that to be applied originally on the operand stack is applied on APS. In writing substance of the instruction into IQ, the S field is specified as "executed". And, even in the case of a stack instruction that involves duplication on the stack (dup, dup2, dup_x1, dup2_x1, dup_x2 and dup2_x2 defined in Java VM), as no free CRF entry, which has been registered on FL, is newly allocated, nothing needs to be written into source/destination fields.

(3) Execution Stage

Same as in the first embodiment except for the following point.

- With regard to stack instructions including those involving duplication on the stack, no operation is performed in the execution stage.

(4) Completion Stage

Same as in the first embodiment except for the following points.

- In completing a stack instruction, even in the case of that involving duplication on the stack, the same operation as that to be applied originally on the operand stack is applied on CPS. (Same as in the first embodiment from the standpoint that CPS is manipulated to reproduce the operation that was applied on APS in the course of decode-and-set of the instruction)
- In compliance with manipulation applied on CPS on account of completion of an instruction, the value of the NR field of each relevant CRF entry is varied. Namely, in each CRF entry whose address is pushed onto CPS, the value of the NR field is varied from "0" to "1". In each CRF entry whose address is duplicated on CPS in compliance with completion of a stack instruction that involves duplication on the stack, the value of the NR field is increased by one. In each CRF entry whose address is popped from CPS, the value of the NR field is decreased by one.
- In each CRF entry whose address is popped from CPS in compliance with manipulation applied on CPS on account of completion of instructions, in the case that the value of the NR field turns out to be "0", the BB field is altered to "0", and the entry address gets to be registered on FL.

The above is an overall description of the behavior of the computer system of the second embodiment.

Fig. 15 - 21 show acts of the computer system of the second embodiment, at each cycle in the course of execution of the above-mentioned program to compute X=T-(A+B)/T , wherein the structure of each entry of CRF 6 / IQ 5 is the same as in Fig. 14 / Fig. 5. In Fig. 15-21, blank fields mean no need for attention to their own contents. In order to refer to contents of each component with progress, each reference numeral is followed by a hyphen, a cycle-wise increasing number, and character "a" for distinguishing from reference numerals in Fig. 6 - 12, which show acts in the first embodiment.

Computer systems of the present invention are not confined to the above embodiments. There may be various embodiments with different detailed structure. For example, the following could be listed.

1. IQ is so structured that it holds source data as well in each entry, and that each source data is to be written in the same cycle when the corresponding WCF field is set to be "1".

2. Each functional unit is equipped with reservation stations at the entry point. In the instruction decode-and-set stage, substance of each instruction is delivered to an appropriate reservation station, as well as written into IQ. (LSU could be equipped with a store buffer, as well as reservation stations)

3. A CRF and a free list are provided for each data type: integer / floating point, 32bit/64bit or the like. And, a set of functional units could be further provided for each data type.

Counterparts of many of these embodiments can be found in register-based superscalar architectures.

A computer system based on the present invention whose instruction set comprises both stack-type instructions and register-type instructions can be incarnated as well. Namely, such a system may be furnished with an advanced register mapping table and a completed register mapping table, each entry of which, being provided for the corresponding register number, is designed to hold an entry address in the consolidated register file, as well as an advanced pointer stack and a completed pointer stack. And, it may be so structured as to manipulate the advanced/completed pointer stack for stack-type instructions, and to access the advanced/completed register mapping table for register-type instructions. In this case, instead of an advanced pointer stack history file, an advanced history file, each entry of which is designed to hold both contents of the advanced pointer stack and contents of the advanced register mapping table, needs to be provided.

INDUSTRIAL UTILITY

As above, the computer system of the present invention, while securing precise handling of exceptions, executes programs described in a machine language based on the stack architecture in an out-of-order manner. So, the system has the advantage of capability of efficient processing by virtue of parallel operation of a plurality of functional units, pipeline processing capability of functional units or the like.

Furthermore, since the system can be so structured as to have the capability of speculative execution based on branch prediction and/or to decode and set / complete a plurality of instructions per cycle, still higher performance can be attained.

**Claims**

**1.** A computer system for executing programs described in a machine language based on the stack architecture, comprising:

a data cache;
a consolidated register file each entry of which is designed to hold data;

an advanced pointer stack having the construction of a stack each entry of which is designed to hold an entry address in said consolidated register file;

an instruction queue having the construction of a FIFO queue each entry of which is designed to hold substance of an instruction;

an arithmetic/logic unit that is designed to execute arithmetic/logic operations; and

a load/store unit that can access said data cache and said consolidated register file,

wherein, in the case that an instruction including a pop operation from the operand stack is decoded, entry addresses in said consolidated register file, to the number of words to be popped, are popped from said advanced pointer stack;

in the case that an instruction including a push operation onto the operand stack is decoded, entries of said consolidated register file that have not been allocated are allocated, to the number of words to be pushed, and the addresses of said newly allocated entries of said consolidated register file are pushed onto said advanced pointer stack;

substance of each decoded instruction, together with the popped / pushed entry addresses in said consolidated register file in the case that the instruction includes a pop / push operation, is written into said instruction queue; and

unexecuted instructions held in said instruction queue are to be executed on the principle of data drive.

**2.** The computer system according to claim 1, further comprising a completed pointer stack having the construction of a stack each entry of which is designed to hold an entry address in said consolidated register file,

wherein, when the instruction held in the head entry of said instruction queue is/becomes ready to be completed, in accordance with the substance in said head entry of said instruction queue, said completed pointer stack is manipulated to reproduce the operation that was applied on said advanced pointer stack in the course of decoding of said instruction, said head entry is dequeued, and

allocation of each entry of said consolidated register file whose address said completed pointer stack loses hold of on account of a pop operation is removed.

**3.** The computer system according to claim 2, further comprising a free list that is designed to hold addresses of unallocated entries of said consolidated register file,

wherein, in the initialized state, the addresses of all the entries of said consolidated register file are registered on said free list;

in the case that an entry of said consolidated register file needs to be allocated, an address of an unallocated entry of said consolidated register file is taken out of said free list; and

the address of each entry of said consolidated register file whose allocation has been removed gets to be registered on said free list.

**4.** The computer system according to claim 2,

said advanced pointer stack and said completed pointer stack being each constructed as a circular buffer,

wherein, in the case that the content of the bottom entry holding an entry address in said consolidated register file is identical between said advanced pointer stack and said completed pointer stack, the data held in the entry of said consolidated register file indicated by said identical content can be spilt into said data cache, with the hold of the entry address in said consolidated register file in said bottom entry removed both in said advanced pointer stack and in said completed pointer stack; and

said consolidated register file can be filled with the last-spilt data by allocating an entry of said consolidated register file that has not been allocated to the last-spilt data, writing said data into said entry, and having the entry under the bottom entry holding an entry address in said consolidated register file hold the address of said entry of said consolidated register file into which said data is being written both in said advanced pointer stack and in said completed pointer stack.

**5.** The computer system according to claim 2, further comprising an advanced pointer stack history file each entry of which is designed to hold contents of said advanced pointer stack,

each entry of said consolidated register file being designed to further hold a branch tag,

wherein, when decoding an instruction, a branch tag is written into each entry of said consolidated register file that is being allocated;

each time a conditional branch instruction is decoded, contents of said advanced pointer stack are written into an entry of said advanced pointer stack history file, and then with the branch tag updated, speculative execution based on branch prediction is carried out;

in the case that a branch prediction turns out to have missed, instructions decoded after the conditional branch instruction are invalidated, allocation of each entry of said consolidated register file in which a branch tag attached to instructions decoded after said conditional branch instruction is written is removed, contents of the entry of said advanced pointer stack history file that were written when said conditional branch instruction was decoded are copied into said advanced pointer stack, and the process is resumed from the instruction at the right place.

**6.** The computer system according to claim 3,

said free list being constructed as a FIFO queue,
wherein, in accordance with a plurality of instructions decoded simultaneously, said advanced pointer stack is manipulated, allocation of entries of said consolidated register file is conducted, and substances of said plurality of instructions are written into successive entries of said instruction queue at a time; and
in accordance with substances held in a plurality of successive entries of said instruction queue, said completed pointer stack is manipulated, and unallocation of entries of said consolidated register file is conducted at a time.

FIG. 1

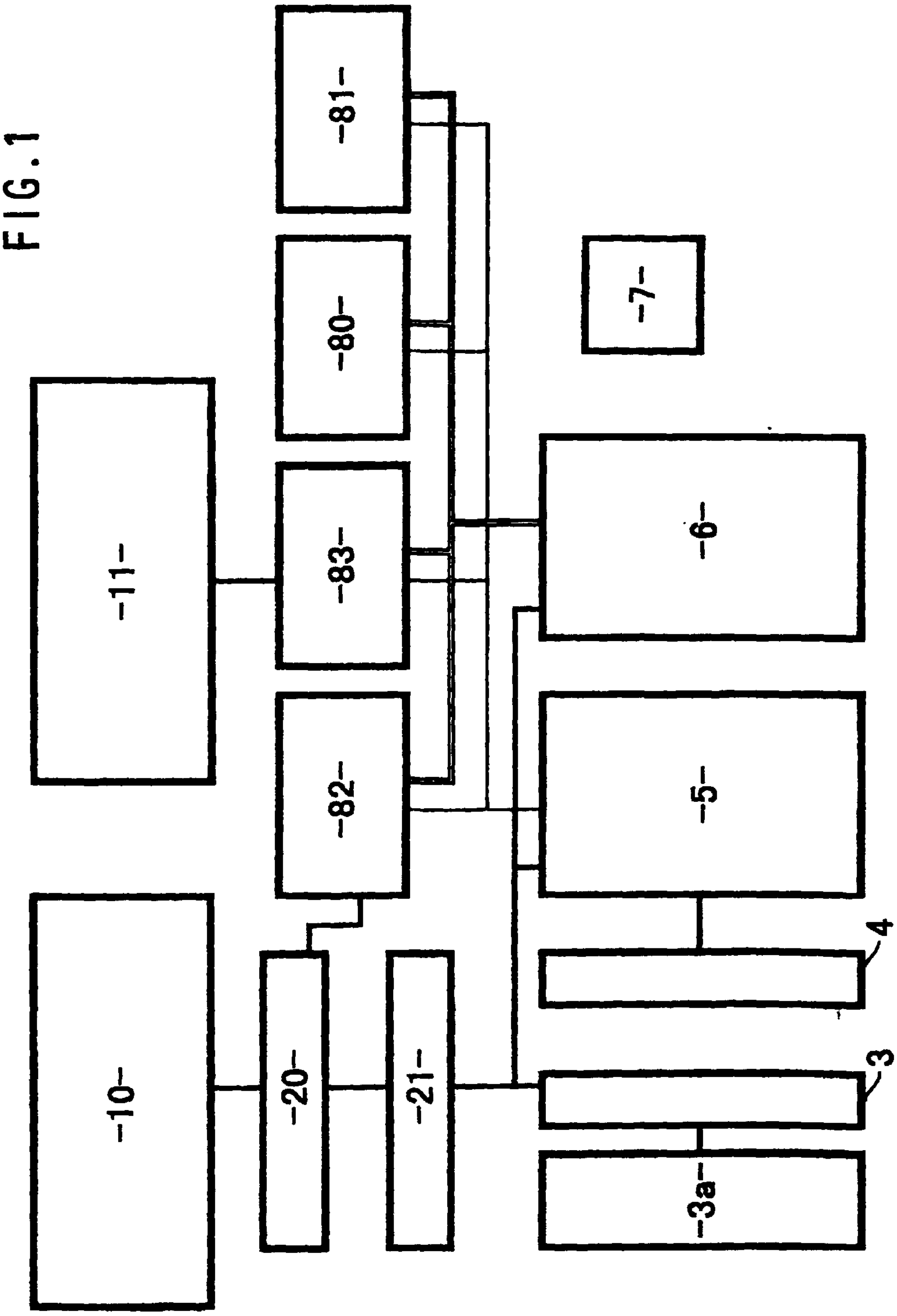

FIG.2

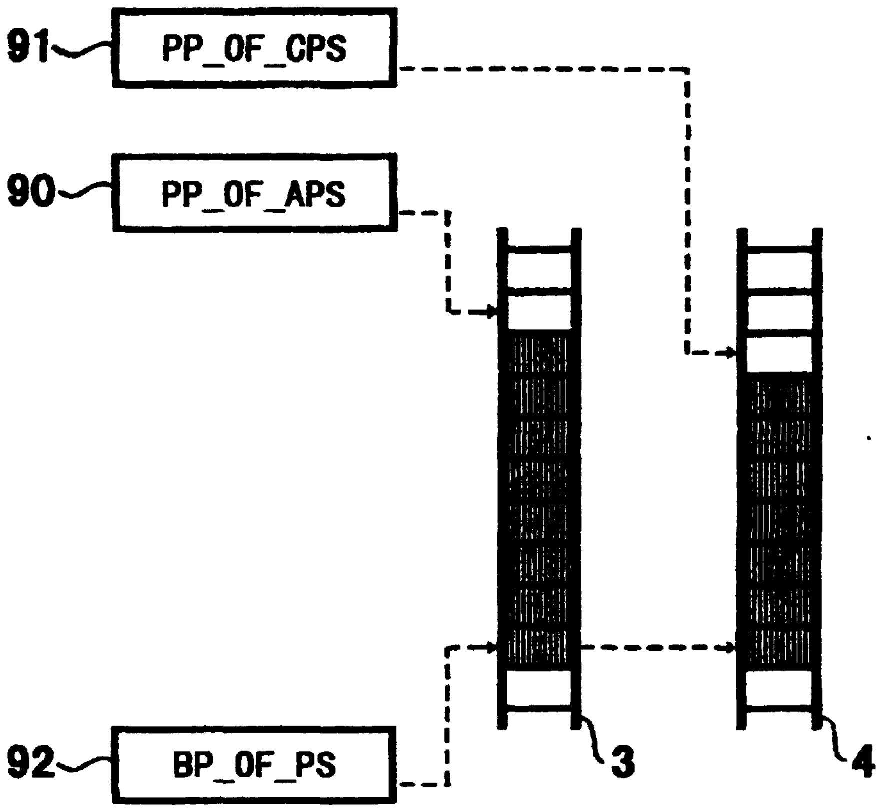


FIG.3

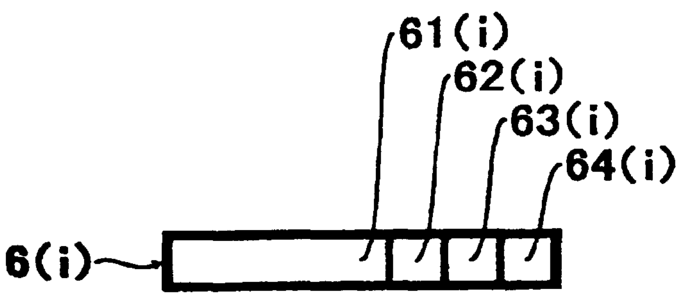

FIG.4

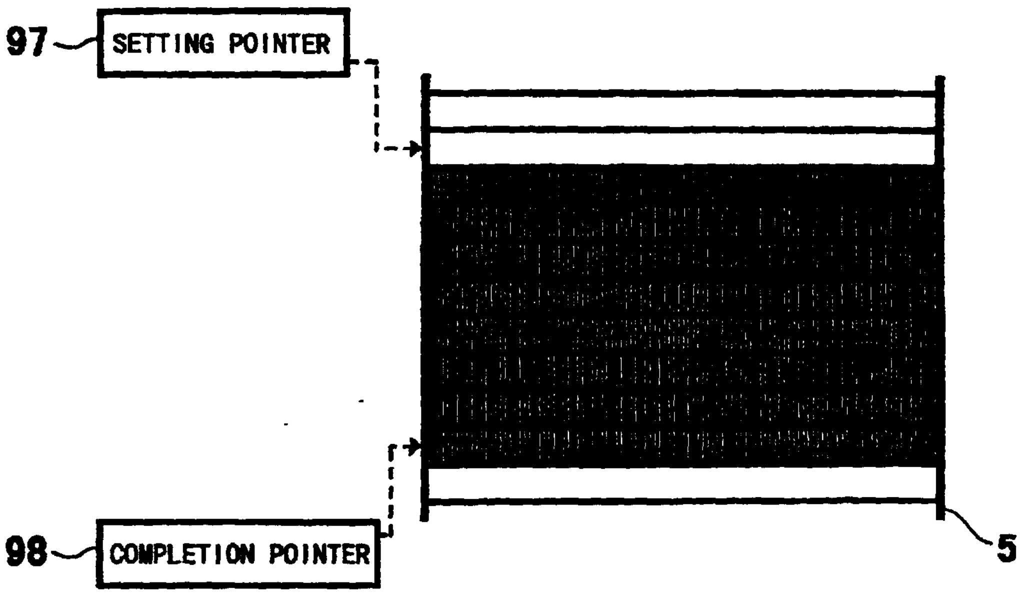
97
SETTING POINTER
98
COMPLETION POINTER
5

FIG.5

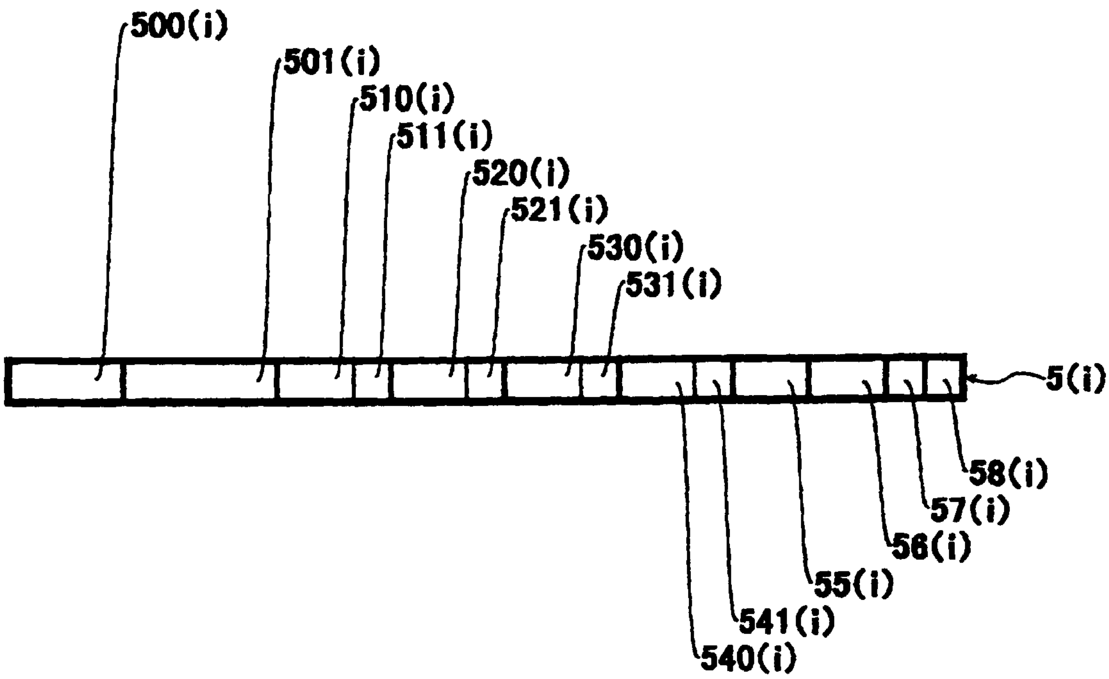
500(i)
501(i)
510(i)
511(i)
520(i)
521(i)
530(i)
531(i)
5(i)
58(i)
57(i)
56(i)
55(i)
541(i)
540(i)

FIG.6

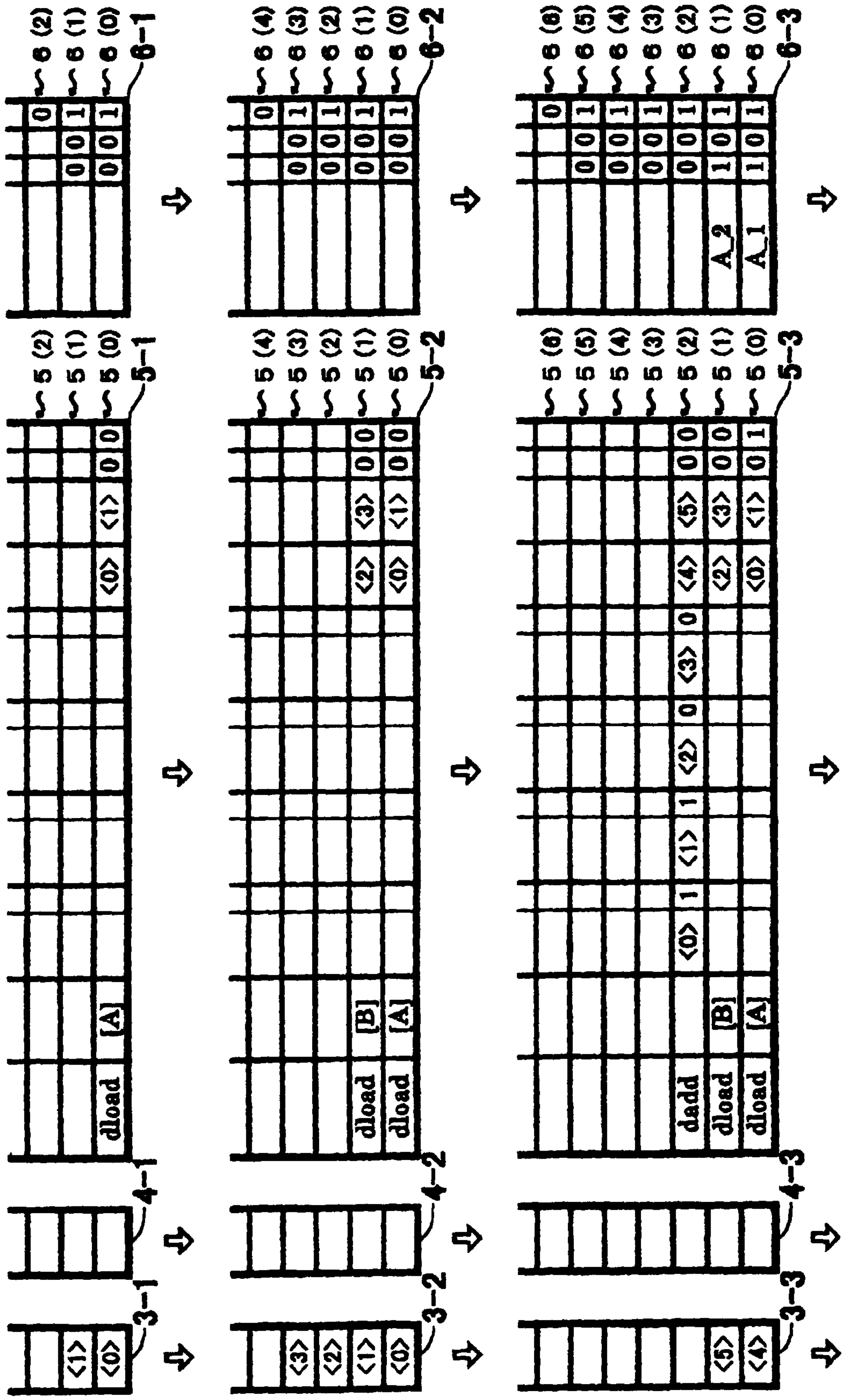
6 (0)
6 (1)
6 (2)
6 (3)
6 (4)
6 (5)
6 (6)
6-1
6-2
6-3
5 (0)
5 (1)
5 (2)
5 (3)
5 (4)
5 (5)
5 (6)
5-1
5-2
5-3
4-1
4-2
4-3
3-1
3-2
3-3
dload
dadd
[A]
[B]
A_1
A_2
<0>
<1>
<2>
<3>
<4>
<5>

FIG. 7

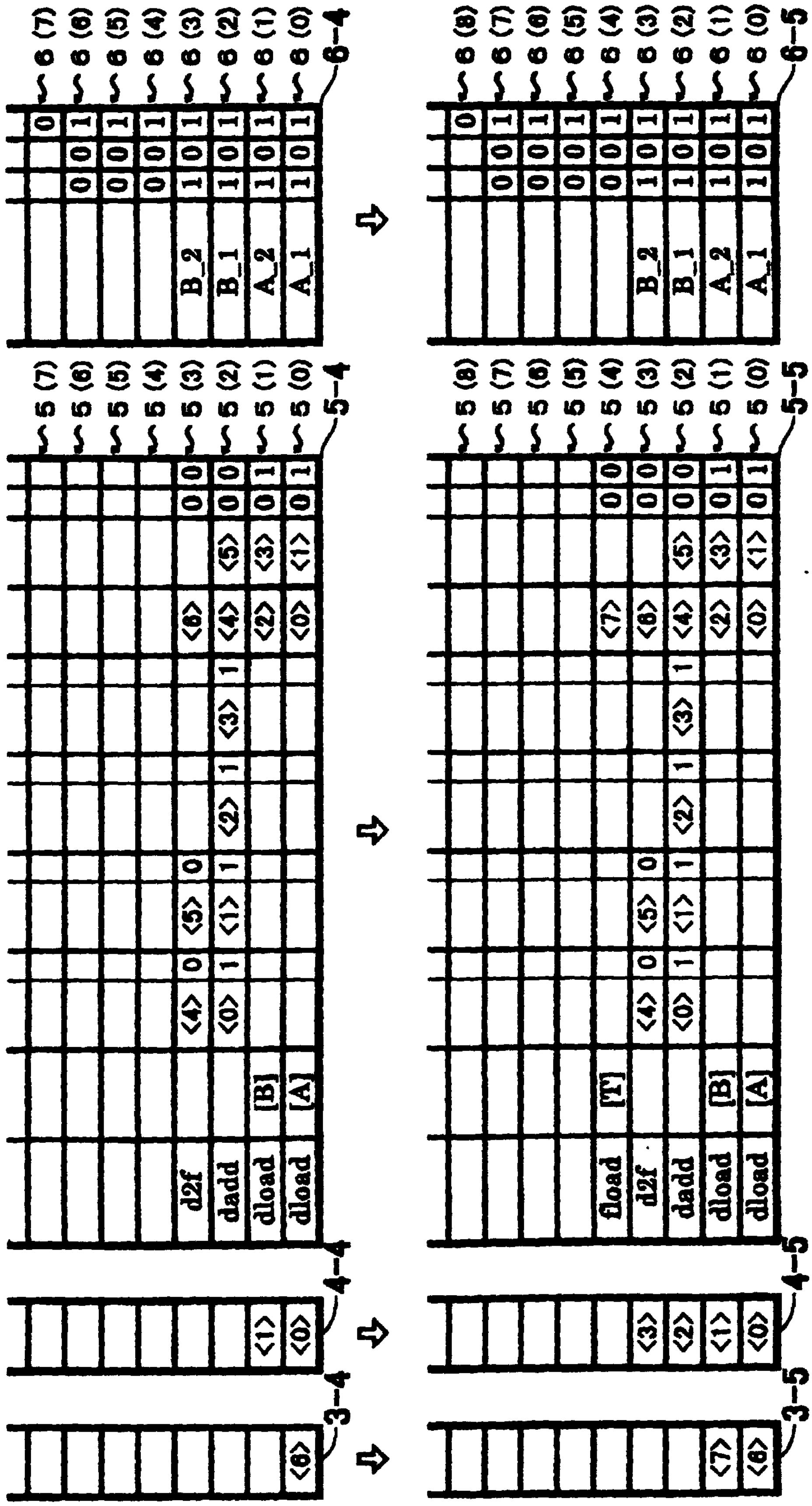
6-4
6 (0)
6 (1)
6 (2)
6 (3)
6 (4)
6 (5)
6 (6)
6 (7)
A_1
A_2
B_1
B_2
5-4
5 (0)
5 (1)
5 (2)
5 (3)
5 (4)
5 (5)
5 (6)
5 (7)
dload
dload
dadd
d2f
[A]
[B]
4-4
3-4
6-5
6 (8)
5-5
5 (8)
fload
[T]
4-5
3-5

FIG.8

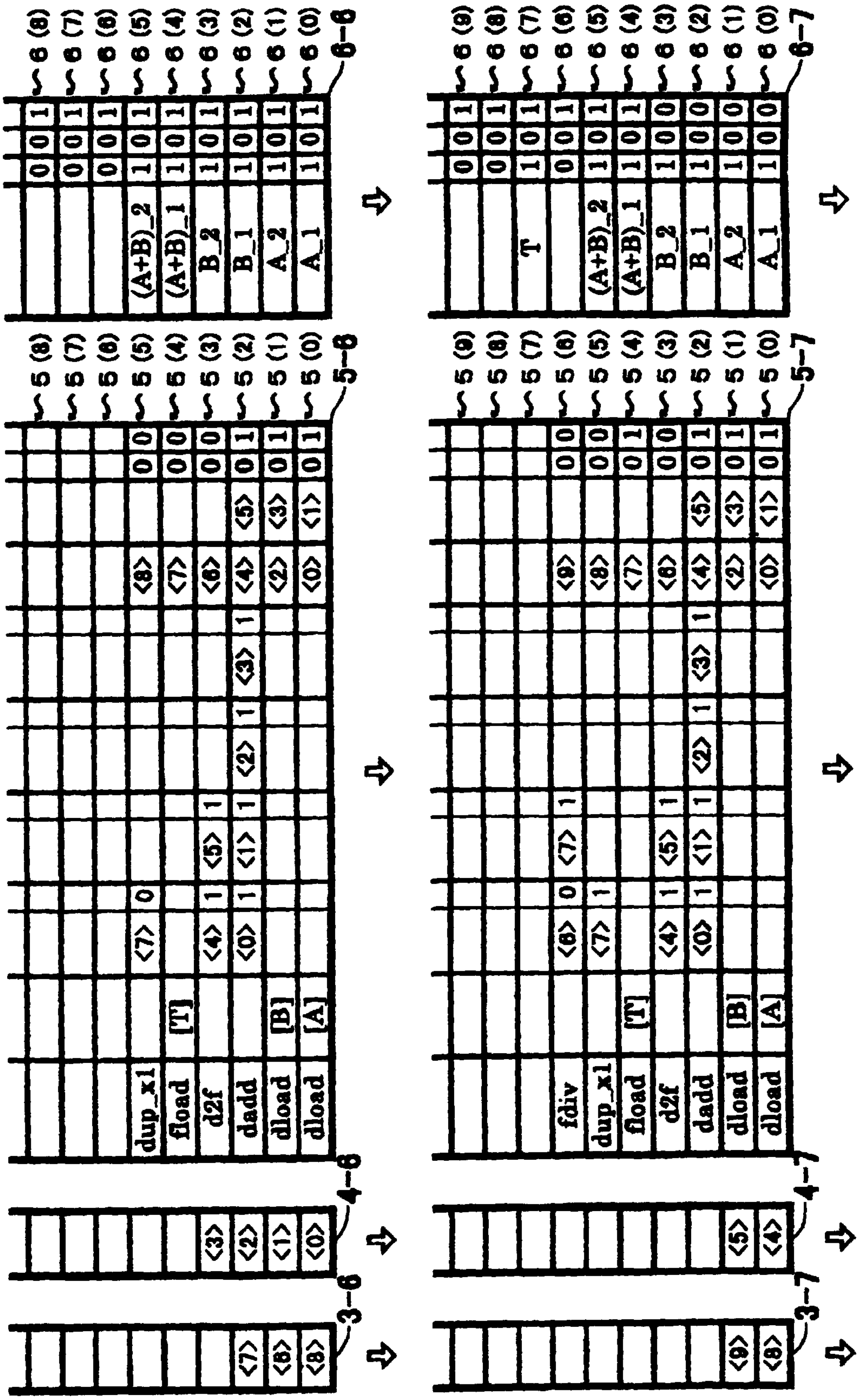
3-6
4-6
5-8
6-8
3-7
4-7
5-7
6-7
dload
dload
dadd
d2f
fload
dup_x1
fdiv
[A]
[B]
[T]
A_1
A_2
B_1
B_2
(A+B)_1
(A+B)_2
T

FIG. 9

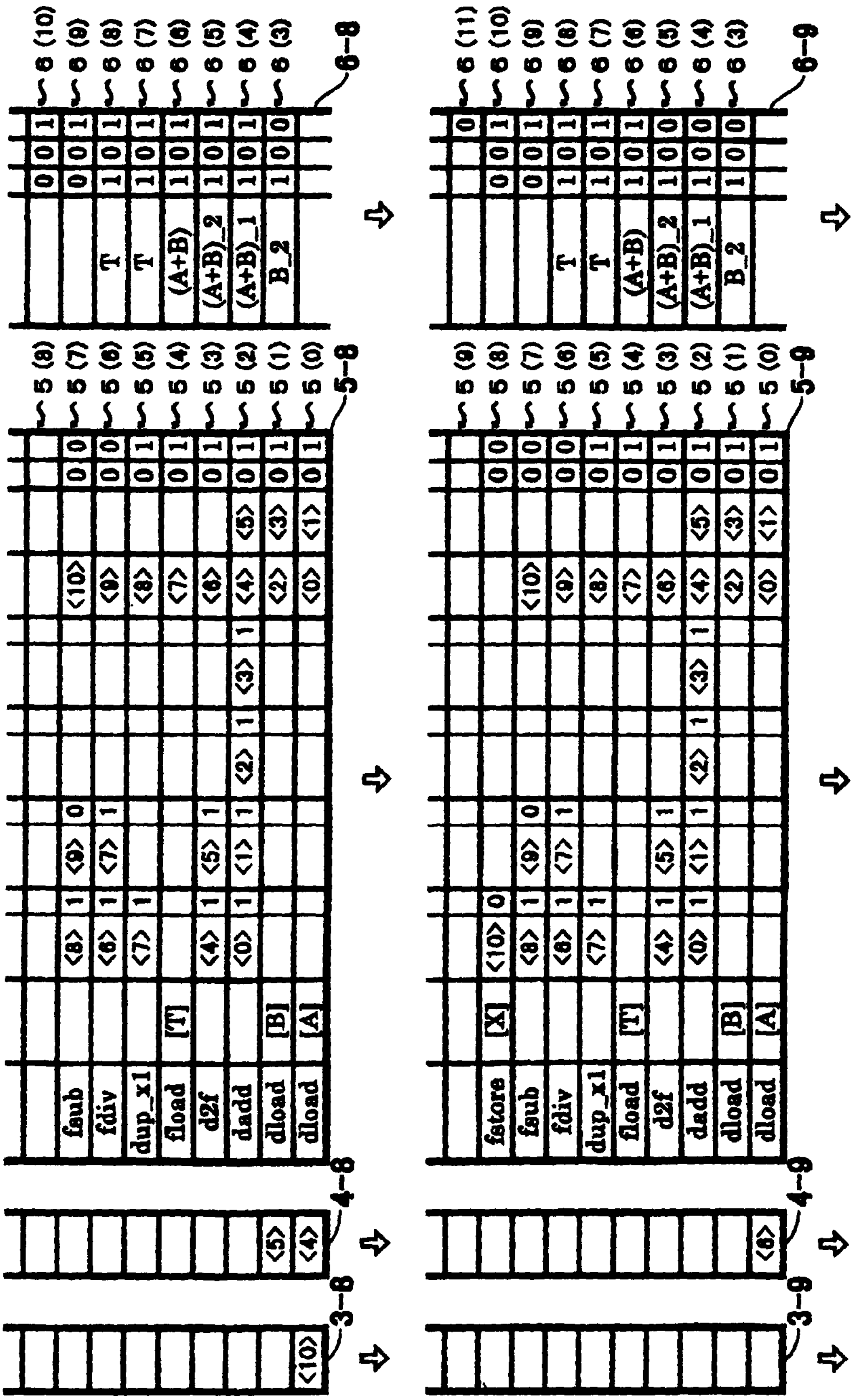

FIG.10

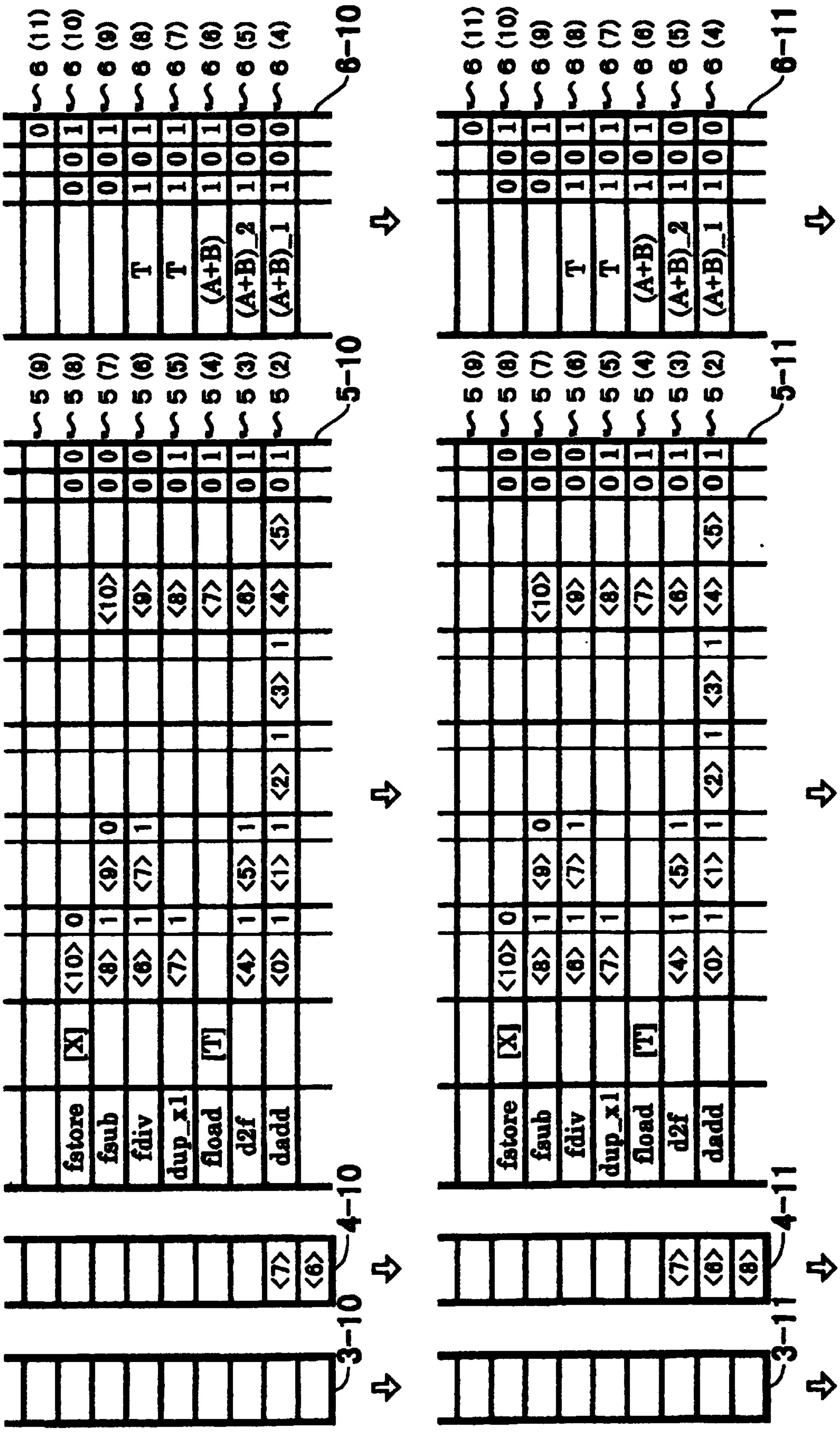
3-10
4-10
5-10
6-10
3-11
4-11
5-11
6-11
fstore
fsub
fdiv
dup_x1
fload
d2f
dadd
(A+B)
(A+B)_2
(A+B)_1

FIG.11

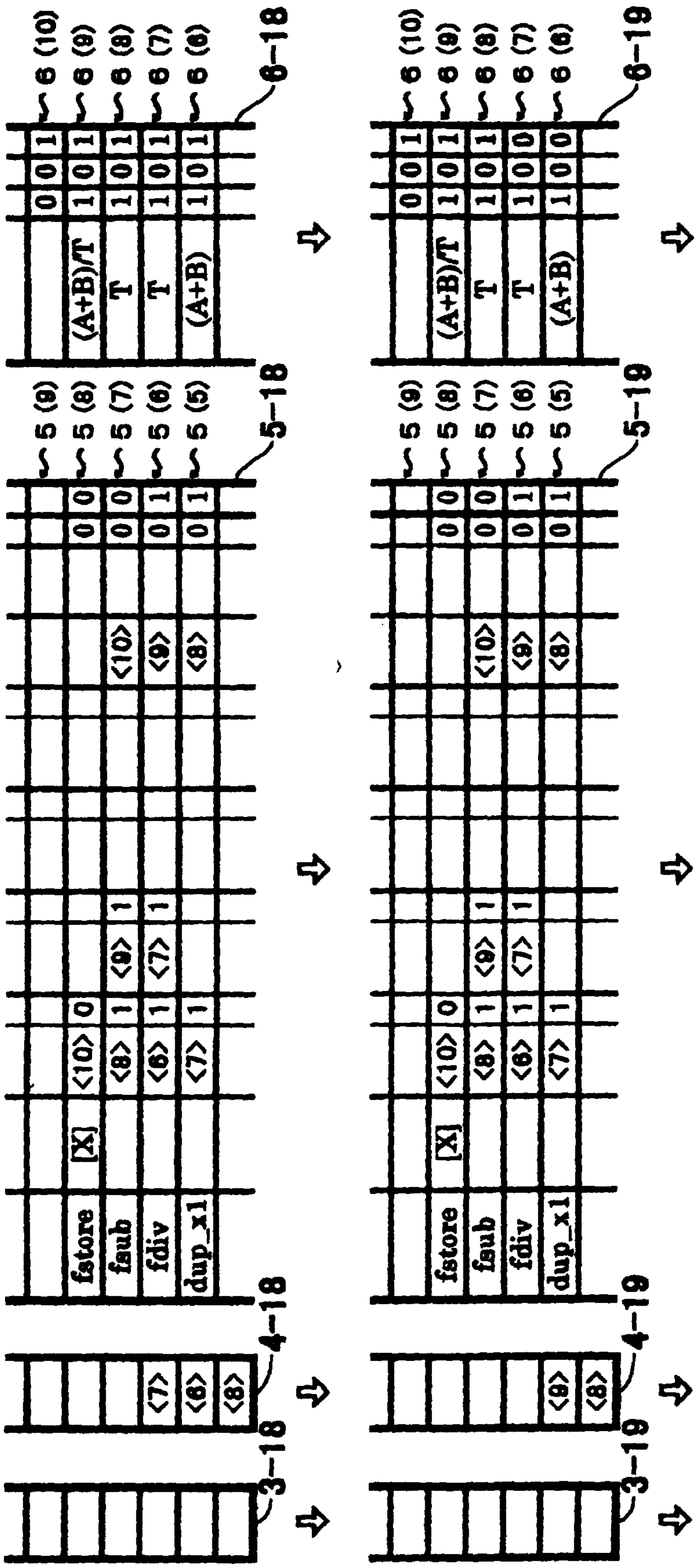
3-18
4-18
5-18
6-18
3-19
4-19
5-19
6-19
fstore
fsub
fdiv
dup_x1
[X]
<10>
<9>
<8>
<7>
<6>
(A+B)/T
T
(A+B)
5 (9)
5 (8)
5 (7)
5 (6)
5 (5)
6 (10)
6 (9)
6 (8)
6 (7)
6 (6)

FIG.12

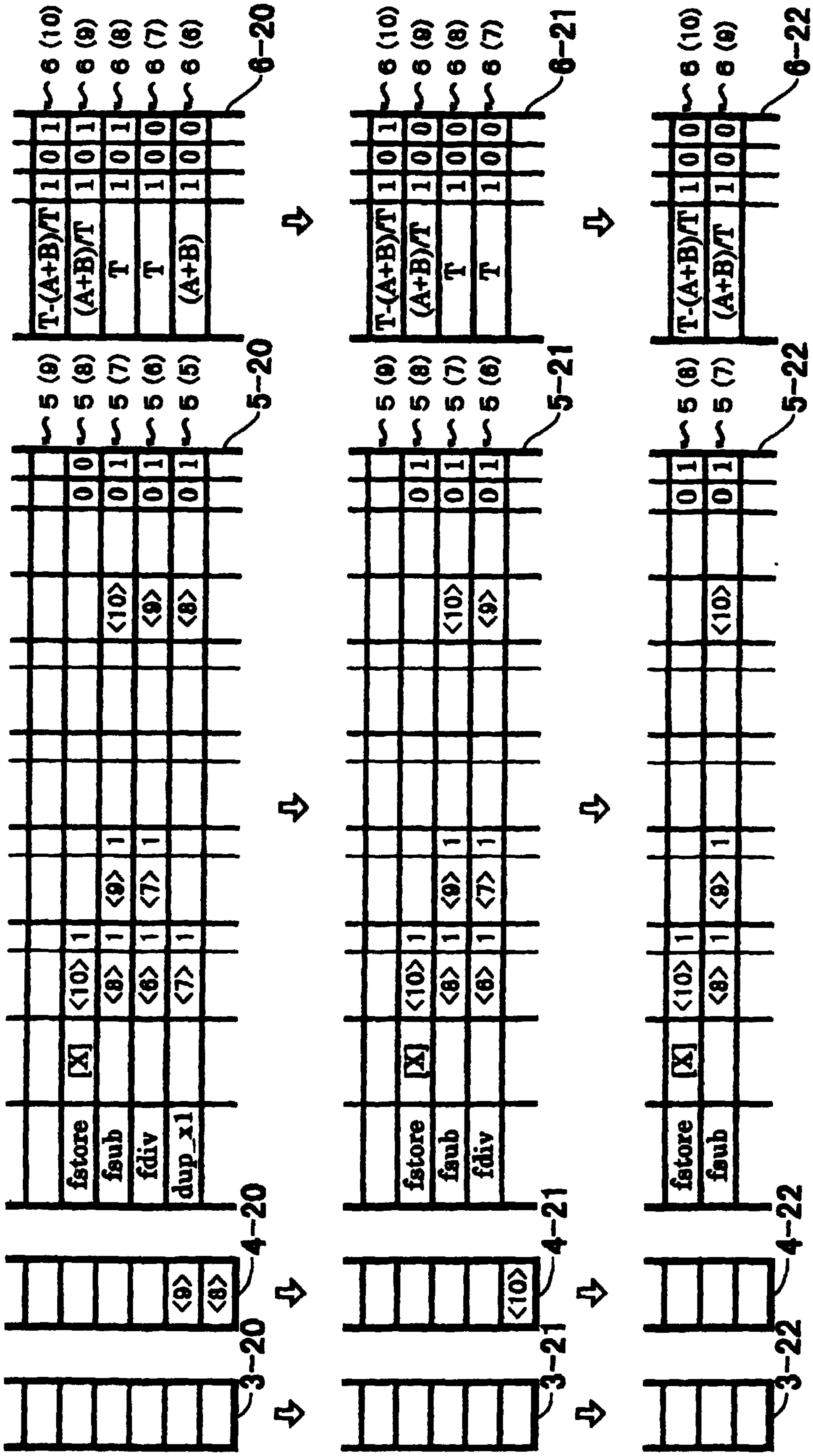
3-20
4-20
5-20
6-20
3-21
4-21
5-21
6-21
3-22
4-22
5-22
6-22
5 (9)
5 (8)
5 (7)
5 (6)
5 (5)
6 (10)
6 (9)
6 (8)
6 (7)
6 (6)
fstore
fsub
fdiv
dup_x1
[X]
T-(A+B)/T
(A+B)/T
T
(A+B)

# FIG.13

| INCREASE IN PP_OF_APS | MANIPULATION TO BE APPLIED ON APS | SUBSTANCES TO BE WRITTEN INTO THREE IQ ENTRIES |
|---|---|---|
| +2 | NC \| NC \| NC \| f5 \| f6 | dload \| [A] \| \| \| \| \| f1 \| f2<br>dload \| [B] \| \| \| \| \| f3 \| f4<br>dadd \| \| f1 \| f2 \| f3 \| f4 \| f5 \| f6 |
| +1 | NC \| NC \| f3 \| f1 \| f2 | d2f \| \| s1 \| s0 \| \| \| f1 \|<br>fload \| [T] \| \| \| \| \| f2 \|<br>dup_x1 \| \| f2 \| \| \| \| f3 \| |
| -3 | NC \| NC \| NC \| NC \| NC | fdiv \| \| s1 \| s0 \| \| \| f1 \|<br>fsub \| \| s2 \| f1 \| \| \| f2 \|<br>fstore \| [X] \| f2 \| \| \| \| \| |

# FIG.14

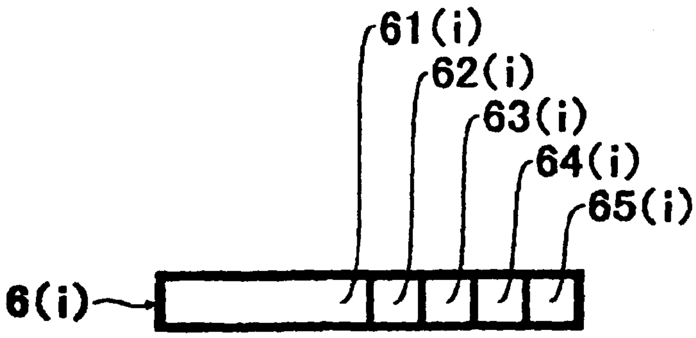

FIG. 15

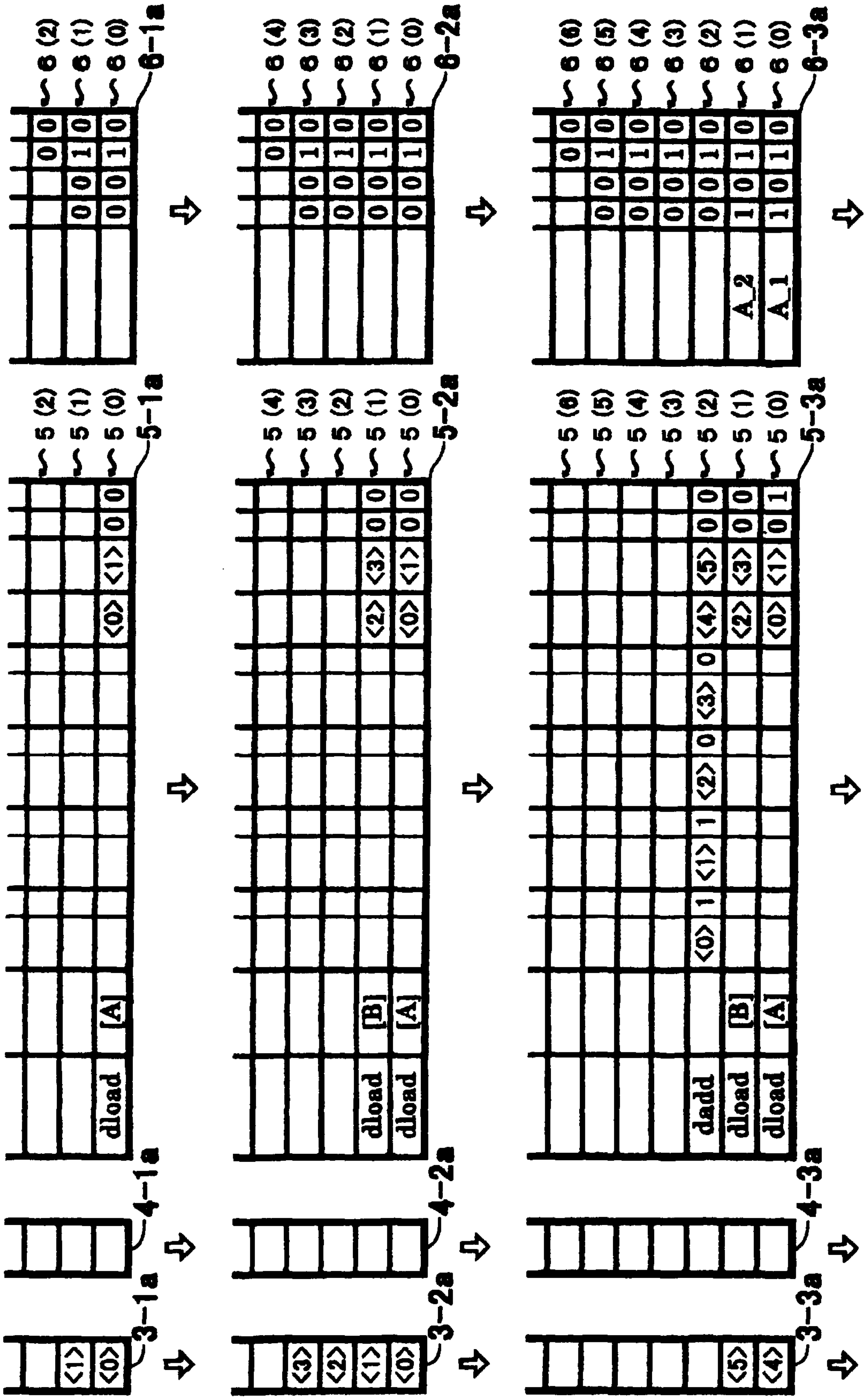
3-1a
4-1a
5-1a
6-1a
3-2a
4-2a
5-2a
6-2a
3-3a
4-3a
5-3a
6-3a
dload
dadd
[A]
[B]
A_1
A_2

FIG. 16

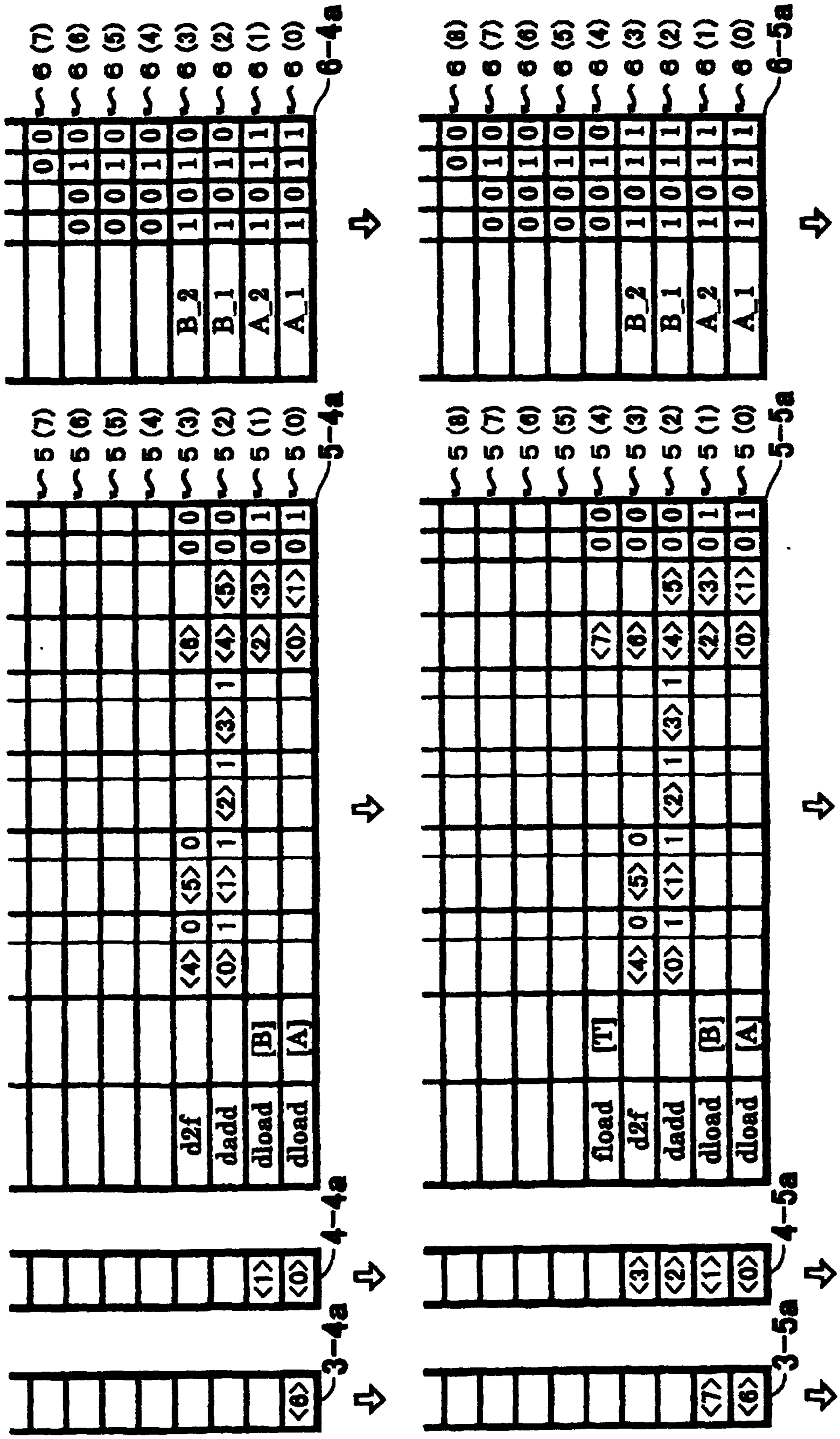
3-4a
4-4a
5-4a
6-4a
3-5a
4-5a
5-5a
6-5a
dload
dload
dadd
d2f
fload
[A]
[B]
[T]
A_1
A_2
B_1
B_2

FIG. 17

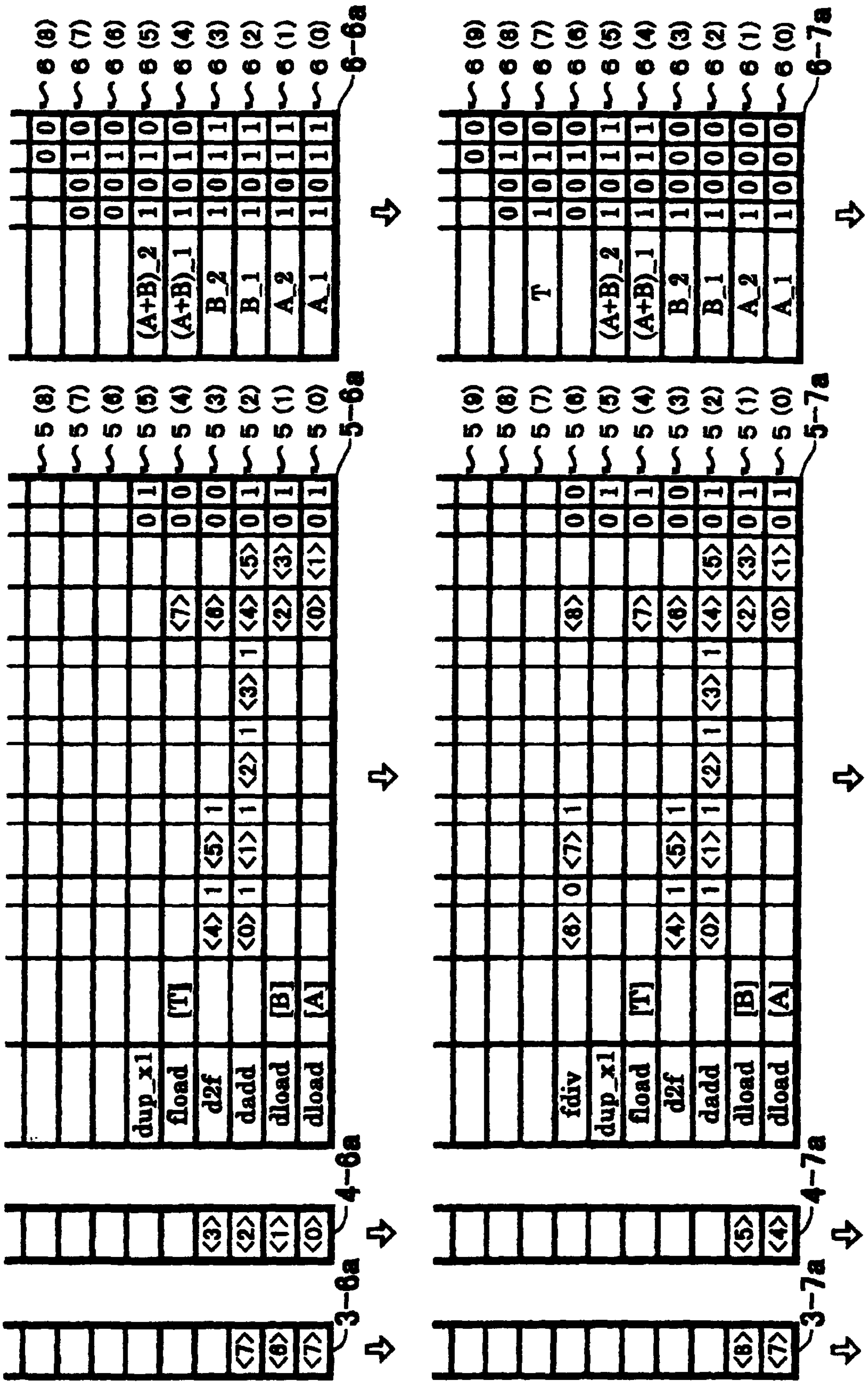

FIG.18

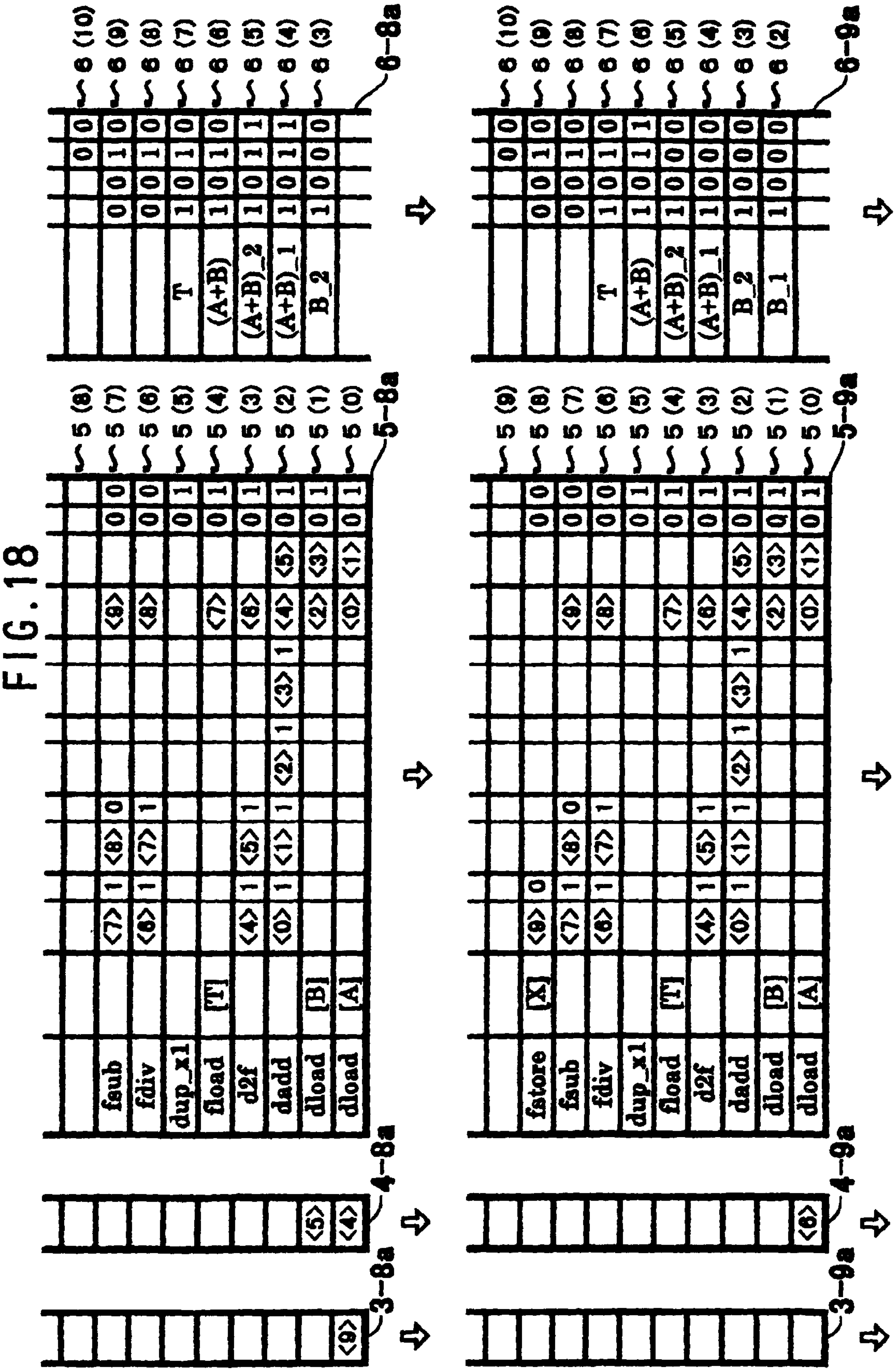
6-8a
6-9a
5-8a
5-9a
4-8a
4-9a
3-8a
3-9a
6 (10)
6 (9)
6 (8)
6 (7)
6 (6)
6 (5)
6 (4)
6 (3)
6 (2)
5 (9)
5 (8)
5 (7)
5 (6)
5 (5)
5 (4)
5 (3)
5 (2)
5 (1)
5 (0)
T
(A+B)
(A+B)_2
(A+B)_1
B_2
B_1
fstore
fsub
fdiv
dup_x1
fload
d2f
dadd
dload
dload
[X]
[T]
[B]
[A]

FIG. 19

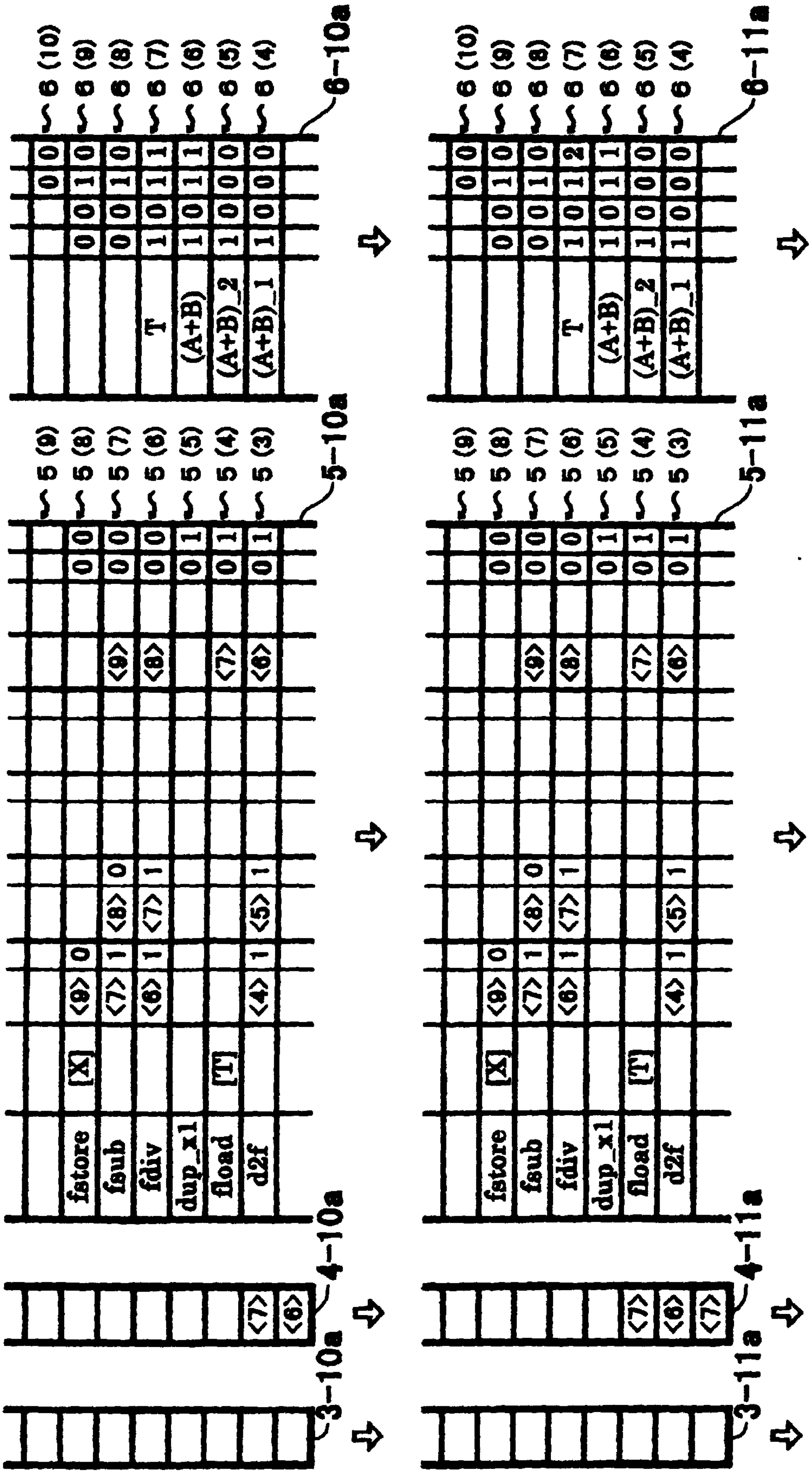

3-10a
4-10a
5-10a
6-10a
3-11a
4-11a
5-11a
6-11a
fstore
fsub
fdiv
dup_x1
fload
d2f
[X]
[T]
T
(A+B)
(A+B)_2
(A+B)_1
5 (3)
5 (4)
5 (5)
5 (6)
5 (7)
5 (8)
5 (9)
6 (4)
6 (5)
6 (6)
6 (7)
6 (8)
6 (9)
6 (10)

FIG. 20

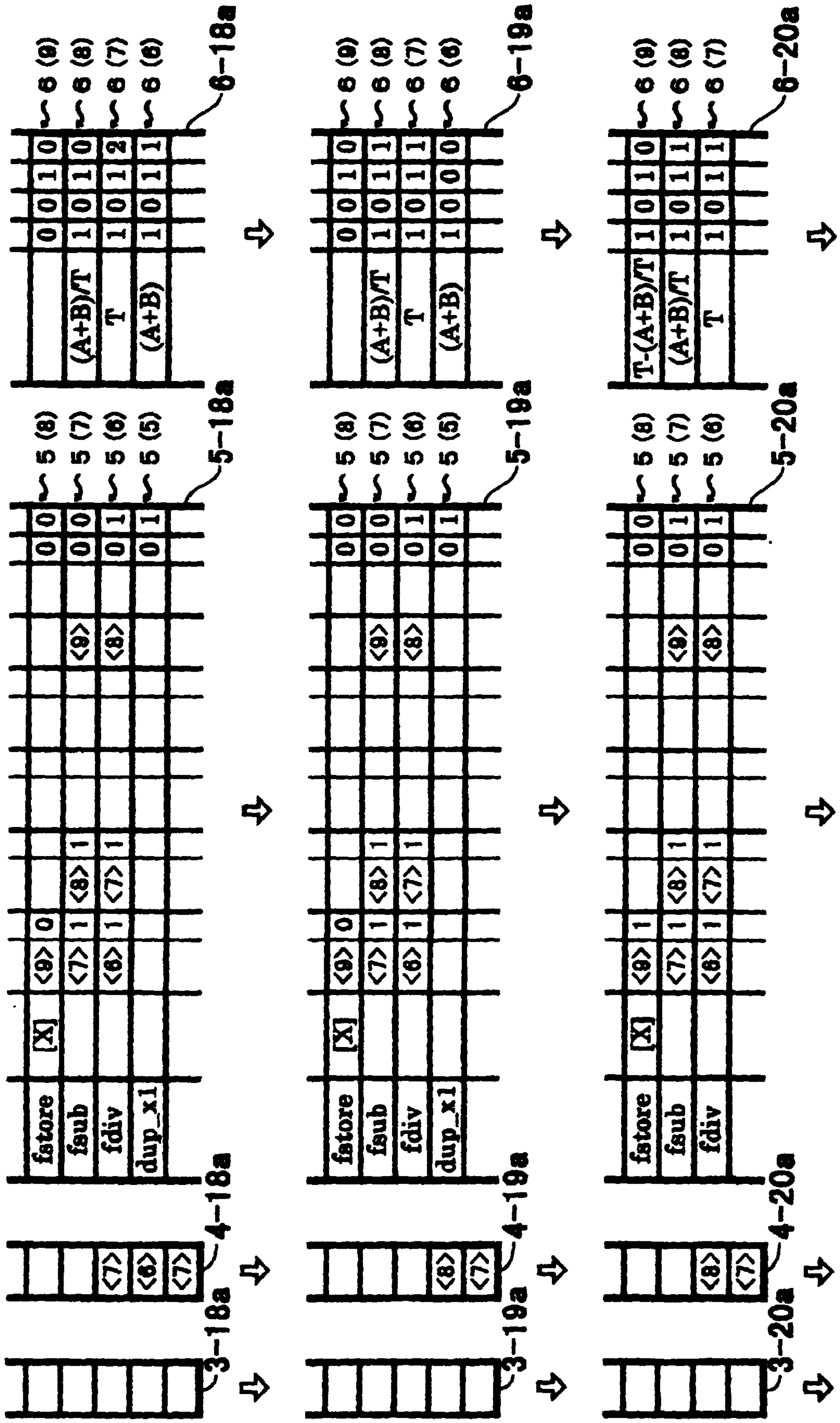
3-18a
4-18a
5-18a
6-18a
3-19a
4-19a
5-19a
6-19a
3-20a
4-20a
5-20a
6-20a
fstore
fsub
fdiv
dup_x1
[X]
(A+B)/T
T
(A+B)
T-(A+B)/T

FIG. 21

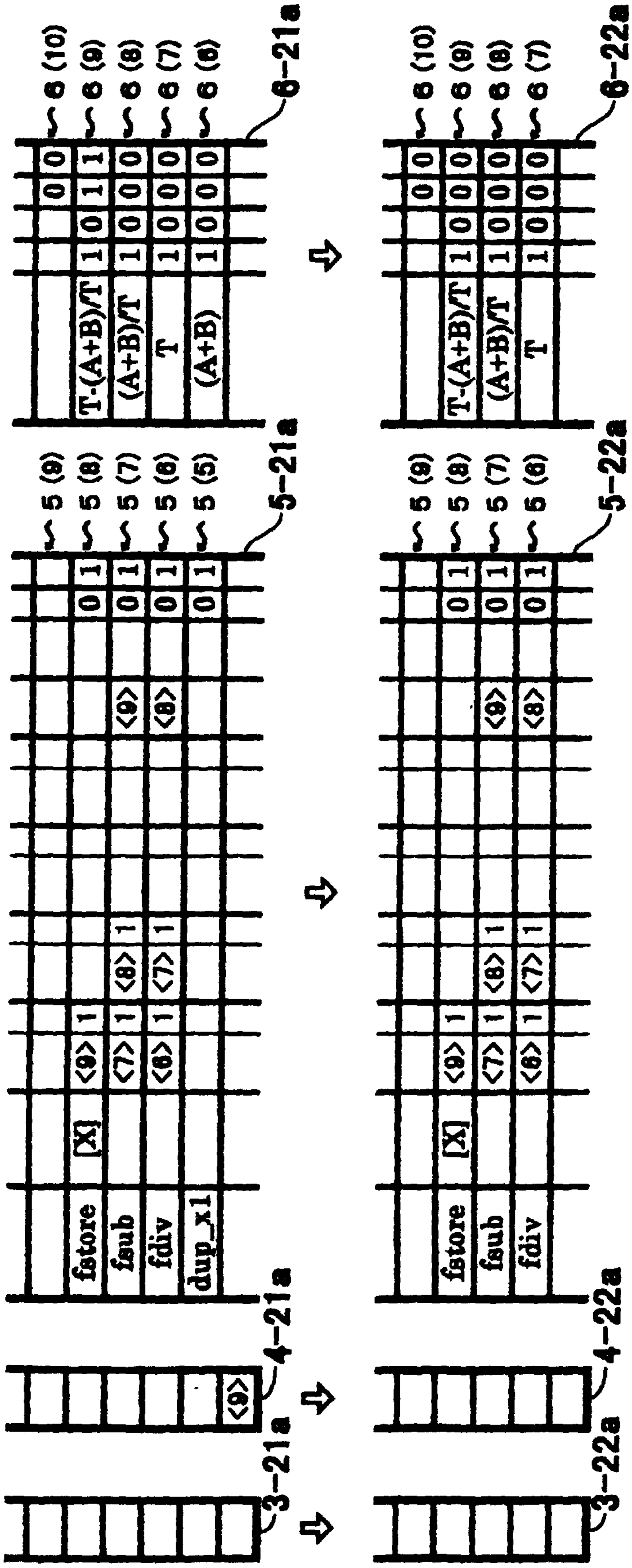
3-21a
4-21a
<9>
5-21a
fstore
fsub
fdiv
dup_x1
[X]
<9> 1
<7> 1
<6> 1
<8> 1
<7> 1
<9>
<8>
5 (9)
5 (8)
5 (7)
5 (6)
5 (5)
6-21a
T-(A+B)/T
(A+B)/T
T
(A+B)
6 (10)
6 (9)
6 (8)
6 (7)
6 (6)
3-22a
4-22a
5-22a
6-22a

# INTERNATIONAL SEARCH REPORT

International application No.
PCT/JP98/05230

A. CLASSIFICATION OF SUBJECT MATTER
Int.Cl[6] G06F9/38, G06F15/82

According to International Patent Classification (IPC) or to both national classification and IPC

B. FIELDS SEARCHED

Minimum documentation searched (classification system followed by classification symbols)
Int.Cl[6] G06F9/38, G06F15/82

Documentation searched other than minimum documentation to the extent that such documents are included in the fields searched
Jitsuyo Shinan Koho 1940-1999 Toroku Jitsuyo Shinan Koho 1994-1999
Kokai Jitsuyo Shinan Koho 1971-1995

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 2-260082, A (Hajime Seki), 22 October, 1990 (22. 10. 90) (Family: none) | 1-6 |
| A | JP, 62-2330, A (NEC Corp.), 8 January, 1987 (08. 01. 87) (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 January, 1999 (21. 01. 99) | 9 February, 1999 (09. 02. 99) |
| Name and mailing address of the ISA/ Japanese Patent Office | Authorized officer |
| Facsimile No. | Telephone No. |

Form PCT/ISA/210 (second sheet) (July 1992)